(19) **Europäisches Patentamt**
**European Patent Office**
**Office européen des brevets**

(11) **EP 1 792 694 B1**

(12) **EUROPEAN PATENT SPECIFICATION**

(45) Date of publication and mention
of the grant of the patent:
**02.06.2010 Bulletin 2010/22**

(51) Int Cl.:
*B25J 9/06* (2006.01)      *B23P 19/00* (2006.01)
*B23P 21/00* (2006.01)      *B25J 17/00* (2006.01)
*B25J 19/00* (2006.01)

(21) Application number: **05766262.9**

(22) Date of filing: **20.07.2005**

(86) International application number:
**PCT/JP2005/013313**

(87) International publication number:
**WO 2006/009170 (26.01.2006 Gazette 2006/04)**

(54) **ARM STRUCTURE FOR ROBOT**

ARMSTRUKTUR FÜR ROBOTER

STRUCTURE DE BRAS POUR ROBOT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **20.07.2004  JP 2004211921
20.07.2004  JP 2004211923**

(43) Date of publication of application:
**06.06.2007  Bulletin 2007/23**

(73) Proprietor: **KAWASAKI JUKOGYO KABUSHIKI
KAISHA
Kobe shi, Hyogo 650-8670 (JP)**

(72) Inventors:
• **INADA, Takahiro**
**6750101 (JP)**
• **MAEGUCHI, Yuji**
**6512274 (JP)**
• **KATO, Isao**
**Hyogo 6638033 (JP)**
• **ISOMURA, Tadashi**
**6550033 (JP)**

(74) Representative: **Charlton, Peter John
Elkington and Fife LLP,
Prospect House
8 Pembroke Road
Sevenoaks,
Kent TN13 1XR (GB)**

(56) References cited:
**EP-A1- 0 158 722      EP-A1- 1 207 025
DE-A1- 10 305 399      JP-A- 8 162 516
JP-A- 10 291 800      JP-A- 10 291 800
JP-A- 2003 039 351      JP-A- 2003 231 075
JP-A- 2004 001 112**

**Description**

TECHNICAL FIELD

The present invention relates to an arm structure for an articulated robot and, more particularly, to an arm structure for a carrying robot capable of carrying a load along a predetermined carrying route.

BACKGROUND ART

A carrying robot is installed in a production plant for producing automobiles and such to carry a vehicle body, namely, a load. The body carried to a predetermined position is processed by a processing robot. A plurality of known carrying robots are arranged on a carrying route. The carrying robot on the upstream side in the upstream direction X2 with respect to a carrying direction carries a body and transfers the same to the carrying robot on the downstream side in the downstream carrying direction X1. Thus the body is transferred from one to another of the successively arranged carrying robots to carry the body along the carrying route (refer to, for example, JP 2003-231075 A).

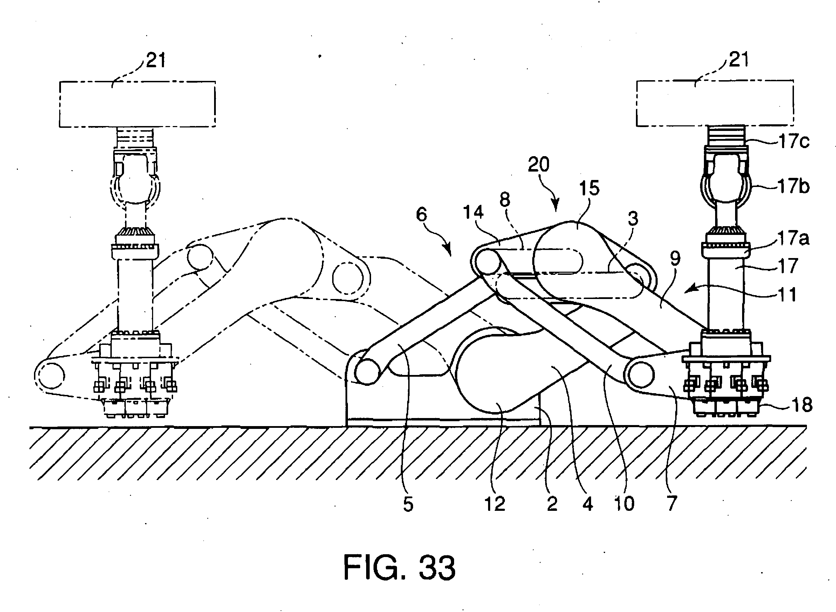

Fig. 33 is a front elevation of a known carrying robot 20. The carrying robot 20 drives the joints of parallel linkages 6 and 11 to carry a load 21. The carrying robot 20 is designed to hold the load 21 at a processing station while the load 21 is being processed.
The known carrying robot 20 has the two parallel linkages 6 and 11. The first parallel linkage 6 has a first lower link 2, a first upper link 3, a first arm 4 and a first auxiliary link 5. The first arm 4 and the first auxiliary link 5 link together the first lower link 2 and the first upper link 3.
The second linkage 11 has a second lower link 7, a second upper link 8 fixed to the first upper link 3, a second arm 9 and a second auxiliary link 10. The second arm 9 and the second auxiliary link 10 link together the second lower link 7 and the second upper link 8. A third arm 17 is joined to the second lower link 7 so as to turn for angular displacement on the third arm 17. A holding device for holding the load 21 is attached to the free end of the third arm 17.
The carrying robot 20 includes a first driving unit for turning the first arm 4 relative to the first lower link 2, a second driving unit for turning the second arm 9 relative to the second upper link 8, and a third driving unit for turning the third arm 17 relative to the second lower link 7.

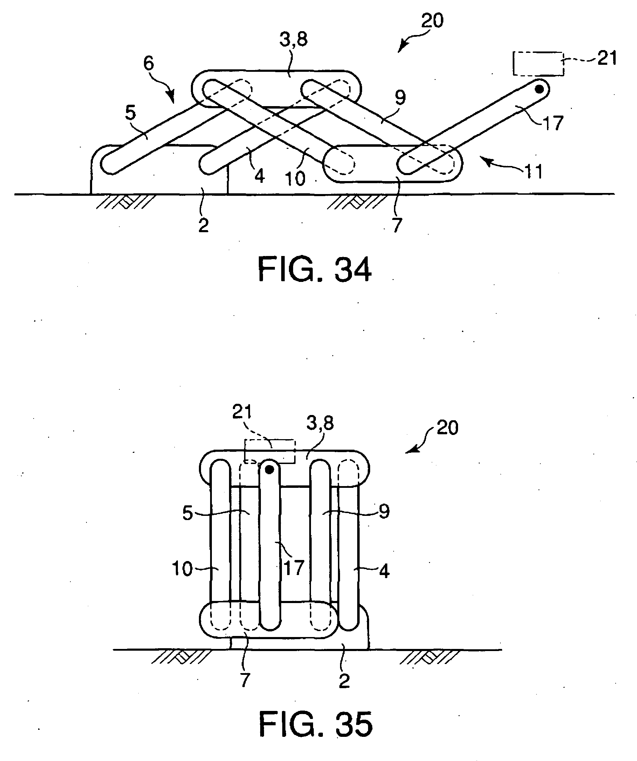

Figs. 34 and 35 are schematic front elevations of the known carrying robot 20. Fig. 34 shows a state where the carrying robot 20 has carried the load 21 to a position at the longest distance from the first lower link 2. Fig. 35 shows a state where the carrying robot 20 has carried the load 21 to a position above the first lower link 2 and is in a reference position. The carrying robot 20 needs to turn the arms of the two parallel linkages 6 and 11 so that the arms may not interfere with each other, which places a restriction on expanding a carrying region in which the load 21 can be carried. More concretely, there is a possibility that the upper links 3 and 8 collide with the second lower link 7, the first arm 4 and the first auxiliary link 5 interfere with each other and the second arm 9 and the second auxiliary link 10 interfere with each other.
The carrying robot 20 drives the joints of a quadric crank mechanism to carry the load 21. Therefore, the carrying robot 20 has a large carrying capacity for carrying the load 21 of a large mass. However, the quadric crank mechanism is a complicated mechanism and the carrying robot 20 including the quadric crank mechanism is inevitably large.

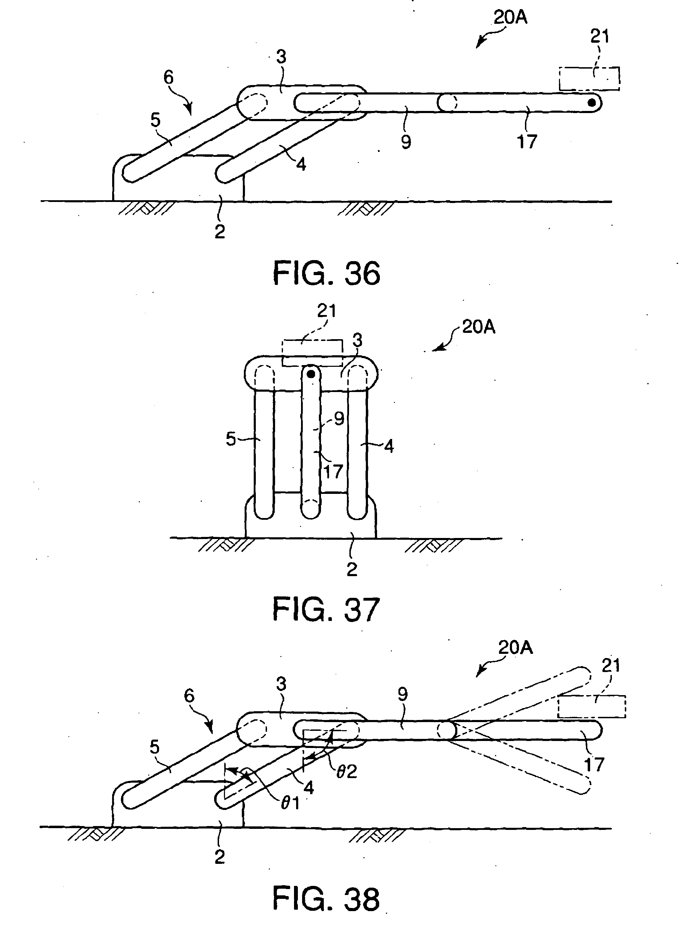

Figs. 36 and 37 show a carrying robot 20A obtained by omitting the second parallel linkage 11 of the known carrying robot 20. Fig. 36 shows a state after the load 21 has been carried to a position at the longest distance from the first lower link 2 by the carrying robot 20A. Fig. 37 shows a state after the load 21 has been carried to a position above the first lower link 2, namely, a state in a reference position.
The carrying robot 20A does not has any mechanism corresponding to the second linkage 11 of the carrying robot 20. Therefore, second arm 9 and the third arm 17 can be extended straight. Thus the carrying robot 20A can carry the load 21 further downstream with respect to the carrying direction than the carrying robot 20.
Fig. 38 is a view of assistance in explaining the movement of the load 21 in a state where the respective positions of the first arm 4 and the second arm 9 are fixed. In some cases, the first arm 4 and the second arm 9 of the carrying robot 20A are held at predetermined angles θ1 and θ2 to a vertical, respectively, for purposes including that of avoiding the interference of the carrying robot 20A with other carrying robots. When the first arm 4 and the second arm 9 are held at the predetermined angles θ1 and θ2 to a vertical, respectively, as shown in Fig. 38, the third arm 17 can move in a narrow range and hence it is difficult to carry the load 21 to a desired position.

DISCLOSURE OF THE INVENTION

Accordingly, it is an object of the present invention to provide a carrying arm structure for a carrying robot capable of carrying a load in a wide range even in a state where movements of the arm are limited.
Another object of the present invention is to provide a small robot having a large carrying capacity.

To achieve the object, a robot arm structure in a first aspect of the present invention includes: a bed installed on a predetermined reference plane; a lower link disposed on the bed; an upper link disposed above the lower link; a first arm joining the lower link and the upper link so as to be capable of being displaced relative to the upper link and the lower link; an auxiliary link joining the lower link and the upper link so as to be capable of being displaced relative to the upper link and the lower link; a second arm having a first end and a second end, the first end being joined to the upper link, the second arm being capable of being displaced relative to the upper link; a third arm having a first end and a second end, the second end of the third arm being joined to the second end of the second arm, the third arm being capable of being displaced relative to the second arm; and a fourth arm having a first end and a second end, the first end of the fourth arm being joined to the second end of the third arm, the fourth arm being capable of being displaced relative to the third arm, the fourth arm being equipped with holding means for holding a load to be carried; wherein the lower link, the upper link, the first arm, and the auxiliary link form a quadric crank mechanism, and the first end of the fourth arm is below the first end of the third arm when the first to fourth arms are respectively vertically extended so as to set the robot arm in a reference position.

Preferably, in the state that the robot arm is set in the reference position, the first to the fourth arms are distanced vertically from the reference plane respectively by distances not shorter than a limit height Hc at which the robot arm is at the nearest possible distance from the reference plane.

Preferably, the second arm has a length Y2 not greater than a value equal to (H - Hc), where H is the vertical distance of the first end of the second arm from the reference plane when the robot arm is set in a specific position in which the first arm is inclined at a predetermined angle to the lower link; and Hc is the limit height Hc.

Preferably, the length Y2 of the second arm is not shorter than a value equal to (Hc + Y3 - H), where Hc is the limit height, Y3 is the length of the third arm and H is the vertical distance of the first end of the second arm from the reference plane when the robot arm is set in the specific position.

Preferably, the robot arm structure further includes an arm position maintaining means for exerting a force necessary for maintaining a position of the second arm to the second arm.

In the robot arm structure in the first aspect of the present invention for the carrying robot, the lower link, the upper link, the first arm and the auxiliary link form the quadric crank mechanism. Therefore, the first arm can be driven for displacement by driving means having a low power even when the load is placed at a position distanced from the bed. Thus the load can be surely carried to a remote position.

The second arm is connected to the upper link, the third arm is connected to the second arm and the fourth arm is connected to the third arm. Therefore, the holding means mounted on the fourth arm can be moved in a wide range by making the second to fourth arms move for angular displacement even in a state where the first arm is held at a predetermined position in a predetermined position relative to the bed. Consequently, the load can be moved in a wide range.

When a plurality of robots are installed in an narrow space, the second to fourth arms of the robot, in some cases, interfere with other robots unless the first arm is held in a predetermined angular position. The load can be moved in a desired posture to a desired position even in such a case by displacing the second to fourth arms. For example, the load can be carried to a desired position by displacing the third and fourth arms even in a state where the second arm is held in a position by the arm position maintaining means. In this case, power necessary for maintaining the respective positions of the first and second arms can be reduced by supporting the second arm by the arm position maintaining means.

According to the present invention, it is possible to avoid the respective heights of the arms being not higher than the limit height Hc in a state where the arms are extended vertically in the reference position. Thus the carrying robot can hold the load in the reference position. The arms extend vertically when the arms are maintained in the reference position, and hence power needed by the driving means to maintain the position can be reduced. When the reference position is a standby position in which the robot is kept in readiness, standby power consumed by the driving means during the standby time can be reduced.

According to the present invention, the second arm has a length Y2 not greater than a value equal to (H - Hc), where H is the vertical distance of the first end of the second arm from the reference plane when the robot arm structure is set in the specific position in which the first arm is inclined at a predetermined angle to the lower link, and Hc is the limit height Hc. Thus the reduction of the height of the second arm below the limit height Hc can be prevented even in a state where the first arm is set in a position to set the robot arm structure in the specific position. Thus the second arm can be turned through an optional angle relative to the first arm in a state where the first arm is set in a position to set the robot arm structure in the specific position. For example, in a state where the second and third arms are displaced to maintain the fourth arm in an optional position, the fourth arm can be moved in the carrying direction without reducing the respective heights of the arms to the limit height. Thus the load held on the fourth arm can be carried without changing the position thereof.

According to the present invention, the robot arm structure is designed such that the length Y2 of the second arm is not shorter than a value equal to (Hc + Y3 - H), where Hc is the limit height, Y3 is the length of the third arm and H is the vertical distance of the first end of the second arm from the reference plane when the robot arm structure is set in the specific position. Thus the reduction of the respective heights of the second and third arms below the limit height Hc can be prevented even in a state where the first arm is set to set the robot arm structure in the specific position. The fourth arm can be moved in the carrying direction with the fourth arm surely maintained in an optional position.

According to the present invention, the position of the second arm can be maintained, even if the load is heavy, by the arm position maintaining means for maintaining the position of the second arm and power to be produced by the driving means for driving the first and second arms can be reduced. Since the robot arm structure has the second, third and fourth arms, the load can be displaced even in a state where the position of the second arm is maintained by the arm position maintaining means.

BRIEF DESCRIPTION OF THE DRAWINGS

Fig. 1 is a schematic front elevation of a carrying robot 30 in a first embodiment according to the present invention;

Fig. 2 is a front elevation of the carrying robot 30 set in a reference position;

Fig. 3 is a view of the carrying robot 30 in a working position;

Fig. 4 is a view showing positional changes of a fourth arm in a state where a second arm 38 is supported by an arm position maintaining means 60;

Fig. 5 is a front elevation of the carrying robot 30;

Fig. 6 is a front elevation of the carrying robot 30 in a carrying operation for carrying a load 31;

Fig. 7 is a front elevation of the carrying robot 30 of assistance in explaining an arm structure included in the carrying robot 30;

Fig. 8 is a sectional view of the arm position maintaining means 60;

Fig. 9 is a schematic plan view of the carrying robot 30 of assistance in explaining force to be exerted on a second arm 38;

Fig. 10 is a front elevation of the carrying robot 30 in a state where a first arm 36 and the second arm 38 are held in positions, respectively, and a third arm 39 and a fourth arm 40 are displaced coordinately;

Fig. 11 is a sectional view of the second arm 38 and a contact member 62 included in the arm position maintaining means 60 and in contact with the second arm 38;

Fig. 12 is a sectional view of assistance in explaining a state where a second end 38b of the second arm 38 is obliquely approaching the arm position maintaining means 60;

Fig. 13 is a sectional view of assistance in explaining a state where a second end 38b of a second arm 38 is obliquely approaching an arm position maintaining means 60 in a first comparative example;

Fig. 14 is a sectional view of assistance in explaining a state where a second end 38b of a second arm 38 is obliquely approaching an arm position maintaining means 60 in a second comparative example;

Fig. 15 is an enlarged view of a second arm before coming into contact with an arm position maintaining means;

Fig. 16 is an enlarged view of the second arm before coming into contact with the arm position maintaining means in the second comparative example;

Fig. 17 is a front elevation of the carrying robot 30 in a reference position;

Fig. 18 is a side elevation of the carrying robot 30 in a reference position;

Fig. 19 is a plan view of a table 50;

Fig. 20 is a front elevation of two carrying robots 30A and 30B in a state where a load 31 is being transferred from one of the carrying robots 30a and 30B to the other;

Fig. 21 is a plan view of the two carrying robots 30A and 30B during load transfer operation;

Fig. 22 is a flow chart of a carrying procedure to be carried out by the carrying robot 30 to carry the load;

Fig. 23 is a diagrammatic view of assistance in explaining a load receiving operation for receiving the load 31 and a load transfer operation for transferring the load 31 of the carrying robot;

Fig. 24 is a front elevation of assistance in explaining some of operations of the carrying robot 30;

Fig. 25 is a flow chart of a control procedure to be carried out by control means 55 in step a2 of the carrying procedure shown in Fig. 22;

Fig. 26 is a front elevation of assistance in explaining some of operations of the carrying robot 30;

Fig. 27 is a view of assistance in explaining operations of a carrying robot 300 in a second embodiment according to the present invention;

Fig. 28 is a view of assistance in comparatively explaining maximum load carrying ranges when a second arm 38 is long and when the second arm 38 is short, respectively;

Fig. 29 is a view showing a state where the second arm 38 is moved toward a bed when the second arm 38 is excessively short;

Fig. 30 is a view showing the relation between the second arm 38 and a third arm 39;

Fig. 31 is a view of assistance in explaining the operation of the carrying robot 300 in the second embodiment;

Fig. 32 is a view comparatively showing positions near bases that can be reached by the carrying robots 30 and 300 embodying the present invention and a known carrying robot 20A;

Fig. 33 is a front elevation of a known carrying robot 20;

Fig. 34 is a front elevation of the known carrying robot 20, in which a load 21 is distanced the longest possible distance apart from a lower link 2;

Fig. 35 is a front elevation of the known carrying robot 20, in which the load 21 is supported above the lower link 2;

Fig. 36 is a front elevation of the carrying robot 20A, in which a load 21 is distanced the longest possible distance apart from the lower link 2 in a carrying direction;

Fig. 37 is a front elevation of the carrying robot 20A, in which a load 21 is held above the lower link 2; and

Fig. 38 is a view of assistance in explaining the movement of the load 21 in a state where the respective positions of a first arm 4 and a second arm 9 are fixed.

## BEST MODE FOR CARRYING OUT THE INVENTION

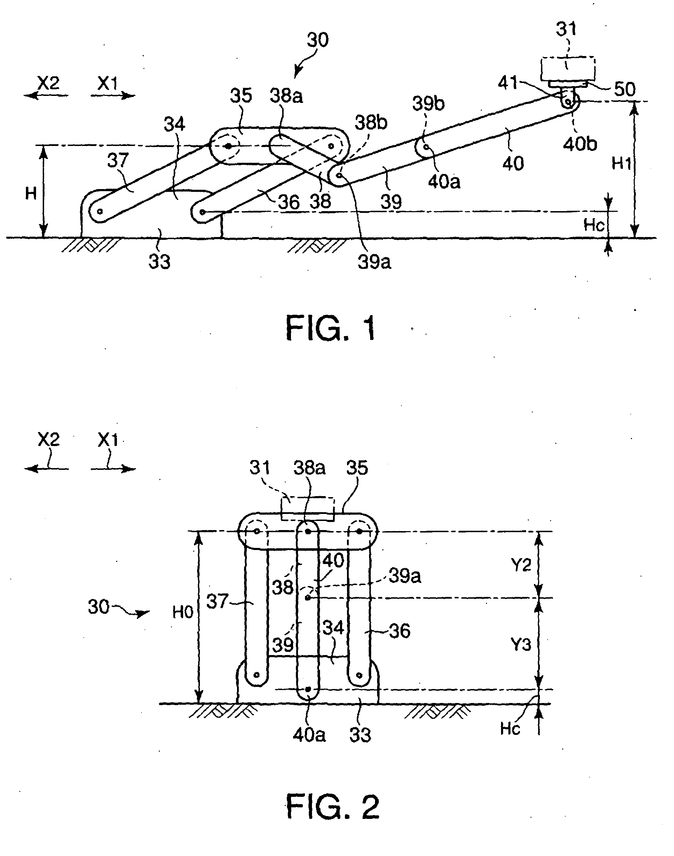

Carrying robots in preferred embodiments according to the present invention will be described with reference to Figs. 1 to 30.

Fig. 1 is a schematic front elevation of a carrying robot 30 in a first embodiment according to the present invention. A plurality of carrying robots 30 like that shown in Fig. 1 are arranged to move a load 31 along a predetermined carrying route. The carrying robot 30 receives the load 31 from the carrying robot 30 on the upstream side in the upstream direction X2 with respect to a carrying direction and transfers the load 31 to the carrying robot 30 on the downstream side in the downstream carrying direction X1. Thus the load 31 is carried along the carrying route. The load 31 is a heavy object, such as a body of an automobile. While the carrying robots 30 carry the load 31 successively, machining robots installed at machining stations machine the load 31.

Each of the carrying robots 30 includes a bed 33 fixedly installed at the site, arms supported on the bed 33 so as to be turned for angular displacement, and arm driving means for turning the arms for angular displacement. The arm driving means of the carrying robot 30 move the arms to move the load 31 connected to the arm along the carrying route.

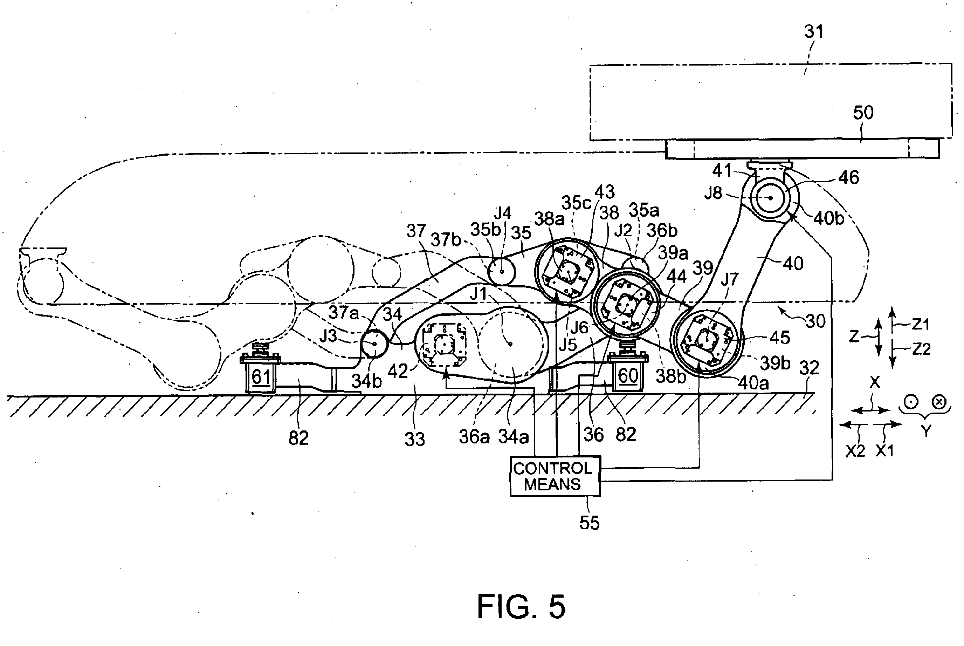

More specifically, the carrying robot 30 includes the bed 33, the plurality of arms and links 34 to 40, and arm driving means 42 to 45 (Fig. 5) for individually driving the plurality of arms 36 and 38 to 40 to displace the same. The arms and the links 34 to 40 are a lower link 34, an upper link 35, a first arm 36, an auxiliary link 37, a second arm 38, a third arm 39 and a fourth arm 40. The arm driving means 42 to 45 are first arm driving means 42 for driving the first arm 36 for displacement, second arm driving means 43 for driving the second arm 38 for displacement, third arm driving means 44 for driving the third arm 39 for displacement, and fourth arm driving means 45 for driving the fourth arm 40 for displacement.

The second arm 38 has a first end 38a and a second end 38b joined to the upper link 35 and the a first end 39a of the third arm 39, respectively. The third arm 39 has a second end 39b connected to a first end 40a of the fourth arm 40. The adjacent ones of the second arm 38 to the fourth arm 40 are joined together so as to be turnable relative to each other for angular displacement.

The carrying robot 30 is provided with a position adjusting member 41, and a position adjusting member driving means 46 (Fig. 5) for driving the position adjusting member 41 to hold the load 31 in a desired position. The position adjusting member 41 is joined to the second end 40b of the fourth arm 40. A table 50, namely, a holding means for holding the load 31, is attached to the position adjusting member 41.

Fig. 2 is a front elevation of the carrying robot 30 set in a reference position. When the carrying robot 30 is set in the reference position, the arms 36 to 40 extend vertically and the first end 40a of the fourth arm 40 is below the first end 39a of the third arm 39. The arms 37 to 40 are formed so as to be respectively at heights not lower than a limit height Hc, namely, a lower limit height from the floor surface, namely, the reference plane, when the carrying robot 30 is set in the reference position. The first end 38a of the second arm 38 is at a predetermined reference height H0 from the floor surface. Each arm is set at a height not lower than the reference height Hc, namely, a lower limit height from the reference surface when the carrying robot 30 is set in the reference position. A value (Y2+Y3), namely, the sum of the respective lengths Y2 and Y3 of the second arm 38 and the third arm 39 is not greater than a value (H0-Hc), namely, a value obtained by subtracting the limit height Hc from the distance H0 between the first end 38a of the second arm 38 and the floor surface. The limit height Hc is dependent on the respective shapes of the links, and dimensions of motors and reduction gears.

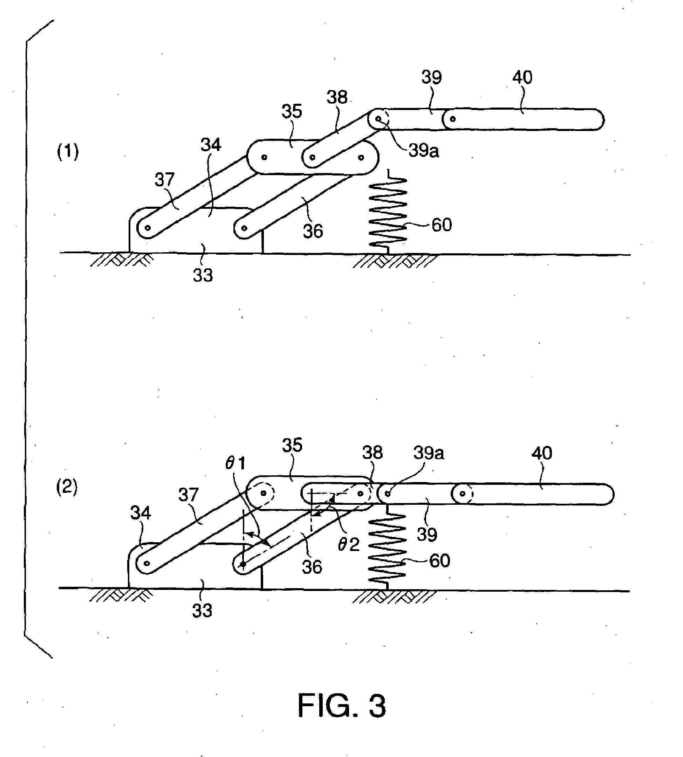

Fig. 3 is view showing the change of the position of the carrying robot 30. As shown in Fig. 3(1), the carrying robot 30 includes an arm position maintaining means 60 for exerting a part of force necessary for maintaining the position of the second arm 38 on the second arm 38. As shown in Fig. 3(2), the arm position maintaining means 60 supports the joint of the second end 38b of the second arm 38 and the first end 39a of the third arm when the first arm 36 is maintained at a predetermined first angle θ1 and the second arm 38 is maintained at a predetermined second angle θ2. The first angle θ1 is the inclination of the axis of the first arm 36 to an imaginary vertical line. The second angle θ2 is the inclination of the axis of the second arm 38 to an imaginary vertical line. The arm position maintaining means 60 is realized by an elastic member.

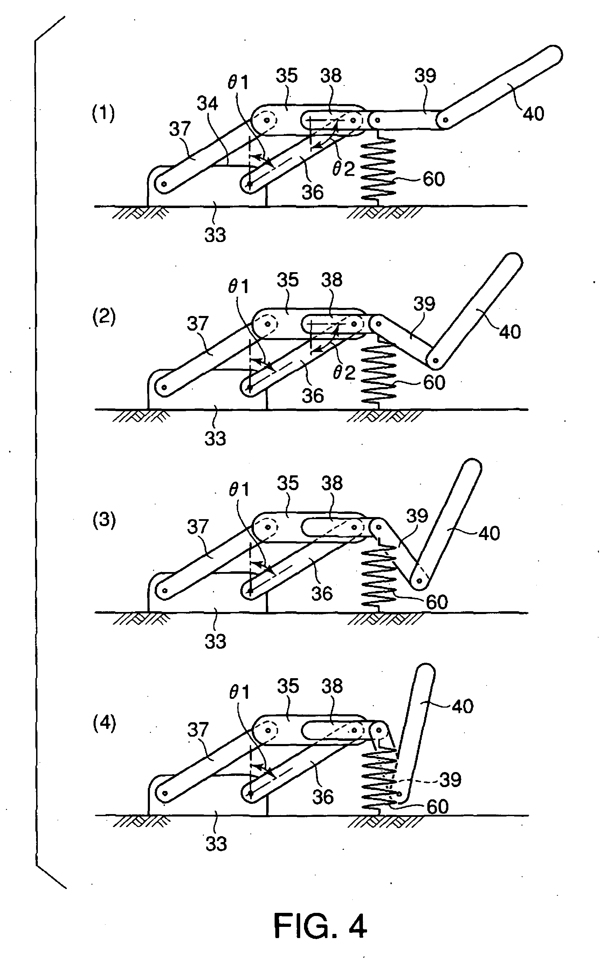

Fig. 4 shows the change of the position of the fourth arm 40 in a state where the second arm 38 is supported by the arm position maintaining means 60. As shown in Figs. 4(1) to 4(4), the load can be moved through the angular displacement of the third arm 39 and the fourth arm 40 with the position of the second arm 38 maintained by the arm position maintaining means 60.

In this embodiment, the lower link 34, the upper link 35, the first arm 36 and the auxiliary link 37 form a quadric crank mechanism. Therefore, A driving means having a small power can drive the first arm 36 for displacement even if the load 31 is placed apart from the bed 33. Thus the load can be more surely carried to a distant position.

The second arm 38 is joined to the first arm 36, the third arm 39 is joined to the second arm 38, and the fourth arm 40 is joined to the third arm 39. Thus holding means mounted on the fourth arm 40 can be moved in a wide range through the angular displacement of the second arm 38, the third arm 39 and the fourth arm 40 even in a state where the first arm 36 is maintained in a predetermined position relative to the bed 33. Thus the load held by the holding means can be moved in a wide range.

When a plurality of robots are installed in an narrow space and the carrying robot 30 interferes with other robots unless the first arm 36 is maintained at a predetermined angle, this embodiment can move the load in a desired position to a desired place by displacing the second arm 38, the third arm 39 and the fourth arm 40. The load can be moved to a desired position by displacing the third arm 39 and the fourth arm 40 even when the second arm 38 is supported and maintained in a position by the arm position maintaining means 60. Power needed by a driving means for driving the first arm 36 and the second arm 38 can be reduced by supporting the second arm 38 by the arm position maintaining means 60.

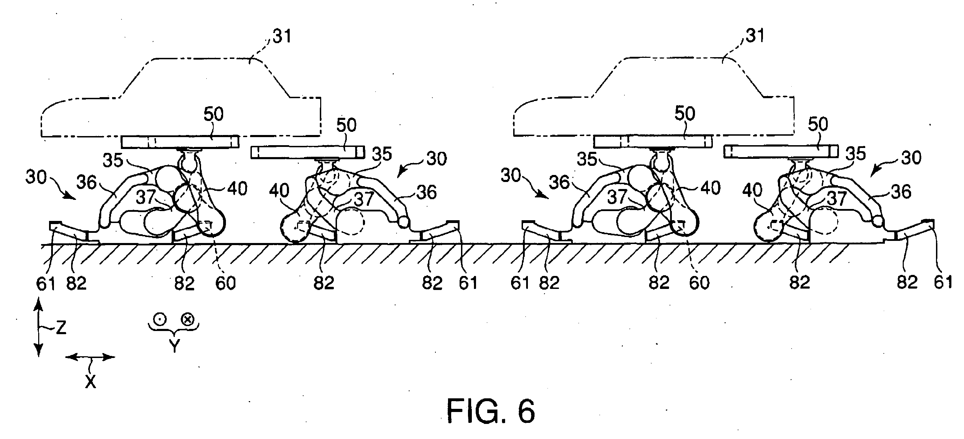

Fig. 5 is a front elevation of the carrying robot 30 and Fig. 6 is a front elevation of the carrying robot 30 in a carrying operation for carrying the load 31. The bed 33 is fixed to the floor 32 of a carrying site in a production plant or the like. The lower link 34 is integrated into the bed 33. The upper link 35 is spaced in an upward direction Z1 from the lower link 34. The lower link 34 and the upper link 35 are parallel to each other. In this embodiment, the lower link 34 and the upper link 35 are horizontal. The first arm 36 and the auxiliary link 37 connect the lower link 34 and the upper link 35. The upper link 35 connected to the lower link 34 by the first arm 36 and the auxiliary link 37 can be displaced through angles relative to the lower link 34.

In the carrying robot 30, the lower link 34, the upper link 35, the first arm 35 and the auxiliary link 37 form a quadric crank mechanism, namely, a hybrid linkage. The upper link 35 maintained parallel to the lower link 34 can move in carrying directions X relative to the bed 33. The load 31 is carried in the carrying direction X. In this embodiment, the carrying directions X are horizontal directions.

The first arm 36 connects a first end 34a on the side of one of the carrying directions of the lower link 34 and a first end 35a on one of the carrying directions of the upper link 35. The first arm 36 has a first end 36a joined to a first end 35a on the side of one of the carrying directions of the lower link 34, and a second end 36b joined to a first end 35a on the side of one of the carrying directions of the upper link 35. The first arm 36 can turn through angular displacement about a first axis J1 on the lower link 34 and about a second axis J2 on the upper link 35.

The first axis J1 is horizontal and parallel to transverse directions Y perpendicular to the carrying directions X. The first axis J1 passes the joint of the lower link 34 and the first arm 36. The second axis J2 is parallel to the first axis J1 and passes the joint of the upper link 35 and the first arm 36. First arm driving means 43 drives the first arm 36 for angular displacement about the first axis J1.

The auxiliary link 37 connects a second end 34b on the side of the other carrying direction of the lower link 34 and a second end 35b on the side of the other carrying direction of the upper link 35. The auxiliary link 37 has a first end 37 joined to the second end 34b of the lower link 34 and a second end 37b joined to the second end 35b of the upper link 35. The auxiliary link 37 can be turned for angular displacement about a third axis J3 on the lower link 34. The auxiliary link 37 can be turned for angular displacement about a fourth axis J4 on the upper link 35.

The third axis J3 is parallel to the first axis J1 and passes the joint of the lower link 34 and the auxiliary link 37. The fourth axis J4 is parallel to the first axis J1 and passes the joint of the upper link 35 and the auxiliary link 37.

The second arm 38 to the fourth arm 40 are connected successively to form a direct-acting linkage, namely, a serial linkage. More concretely, a first end 38a of the second arm 38 is joined to a middle part 35c with respect to the carrying directions of the upper link 35. The second arm 38 can be turned for angular displacement about a fifth axis J5 on the upper link 35. The fifth axis J5 is parallel to the first axis J1 and passes the joint of the upper link 35 and the second arm 38. The second arm driving means 43 drives the second arm 38 for angular displacement about the fifth axis J5.

The third arm 39 has a first end 39a joined to the second end 38b of the second arm 38. The third arm 39 can be turned for angular displacement about a sixth axis J6 on the second arm 38. The sixth axis J6 is parallel to the first axis J1 and passes the joint of the second arm 38 and the third arm 39. The third arm driving means 44 drives the third arm 39 for angular displacement about the sixth axis J6.

The fourth arm 40 has a first end 40a joined to the second end 39b of the second arm 39. The fourth arm 40 can be turned for angular displacement about a seventh axis J7 on the third arm 39. The seventh axis J7 is parallel to the first axis J1 and passes the joint of the third arm 39 and the fourth arm 40. The fourth arm driving means 45 drives the fourth arm 40 for angular displacement about the seventh axis J7.

The position adjusting member 41 is joined to the second end of the fourth arm 40. The position adjusting member 41 can be turned about an eighth axis J8 on the fourth arm 40. The eighth axis J8 is parallel to the first axis J1 and passes the joint of the fourth arm 40 and the position adjusting member 41. The position adjusting member driving means 46 drives the position adjusting member 41 for angular displacement about the eighth axis J8.

The holding means is mounted on the position adjusting member 41. Desirably, the holding means is capable of detachably holding the load 31. In this embodiment, the holding means is a table 50. The load 31 is supported on the table 50. The table 50 may be provided with a holding mechanism for detachably holding the load 31. The position of the position adjusting member 41 about the carrying directions X, the transverse directions Y and the vertical directions Z is manually adjustable. Thus the position of the table 50 can be minutely adjusted and the load 31 supported on the table 50 can be stably carried.

The table 50 held at a desired height can be horizontally moved by individually driving the first arm 36, the second arm 38, the third arm 39 and the fourth arm 40 for displacement. In this embodiment, the table 50 held in a desired position at a desired height can be horizontally moved by coordinately individually driving the first arm 36, the second arm 38, the third arm 39, the fourth arm 40 and the position adjusting member 41.

The carrying robot 30 includes control means 55. The control means 55 controls the first arm driving means 42, the second arm driving means 43, the third arm driving means 44, the fourth arm driving means 45 and the position adjusting member driving means 46. The driving means 42 to 46 are, for example, servomotors, and the control means 55 is, for example, a robot controller. The robot controller adjusts currents supplied to the servomotors. The control means 55 calculates currents to be supplied to the servomotors, and supplies the calculated currents to the servomotors to carry the load 31 along a predetermined carrying route.

The control means 55 is provided with a storage unit for storing predetermined programs, an arithmetic unit for carrying out the programs stored in the storage unit, an output unit for sending out drive signals determined by the arithmetic operations performed by the arithmetic unit to the driving means 42 to 46, and an input unit for receiving instructions provided by the operator and angular displacement data provided by the driving means. The storage unit is a memory. The arithmetic unit is an arithmetic circuit, such as a CPU.

The control means 55 controls the arm driving means 42 to 45 for coordinated operations to move the table 50 horizontally. The position adjusting member driving means 46 is operated coordinately to move the table 50 horizontally with the load 31 held in a fixed position.

The carrying robot 30 is provided with arm position maintaining means 60 and 61 to maintain the position of the second arm 38. The arm position maintaining means 60 and 61 come into contact with the second end 38b of the second arm 38 and exerts a part of force necessary for maintaining the position of the second arm 38 on the second arm 38. The arm position maintaining means 60 and 61 are on the side in the downstream carrying direction X1 and on the side in the upstream carrying direction X2, respectively, with respect to the bed 33. The second end 38b of the second arm 38 comes into contact with the arm position maintaining means 60 on the side in the downstream carrying direction X1 when the second end 38b of the second arm 38 is moved in the downstream carrying direction X1 and receives an upward force from the arm position maintaining means 60. The second end 38b of the second arm 38 comes into contact with the arm position maintaining means 61 on the side of the upstream carrying direction X2 when the second arm 38b of the second arm 38 is moved in the upstream carrying direction X2 and receives an upward force from the arm position maintaining means 61.

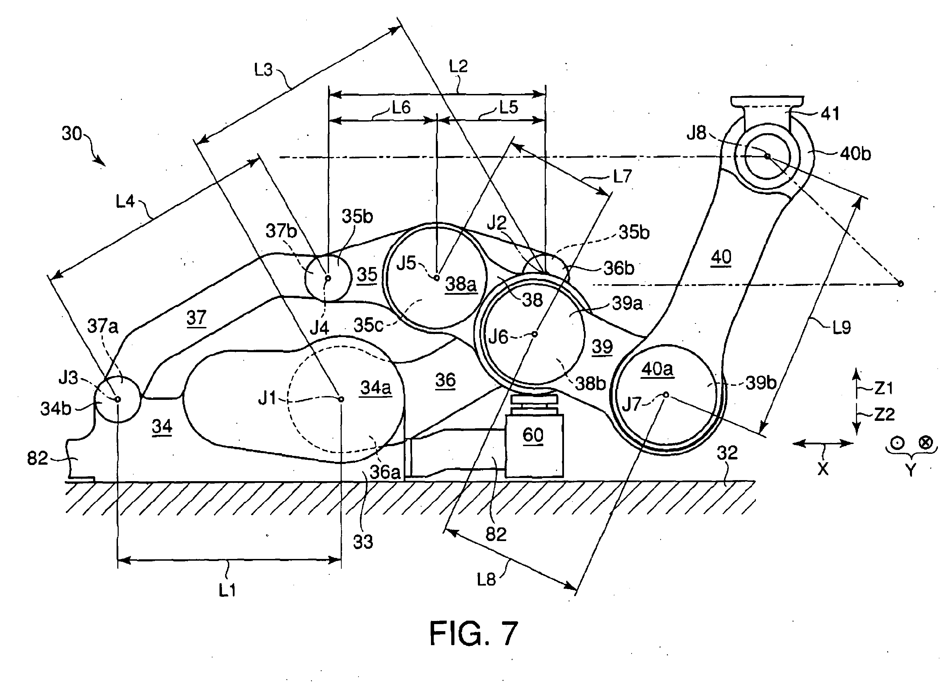

Fig. 7 is a front elevation of the carrying robot 30 showing the arrangement of the arms of the carrying robot 30. A first distance L1 between the first axis J1 and the third axis J3 and a second distance L2 between the second axis J2 and the fourth axis J4 are equal. A third distance L3 between the first axis J1 and the second axis J2 and a fourth distance L4 between the third axis J3 and the fourth axis J4 are equal. Thus the lower link 34, the upper link 35, the first arm 36 and the auxiliary link 37 form a shape substantially resembling a parallelogram

A fifth distance L5 between the second axis J2 and the fifth axis J5 and a sixth distance L6 between the fourth axis L4 and the fifth axis J5 are approximately equal. A seventh distance L7 between the fifth axis J5 and the six axis J6 and an eighth distance L8 between the sixth axis J6 and the seventh axis J7 are approximately equal. The sum of the seventh distance L7 and the eighth distance L8 is approximately equal to a ninth distance L9 between the seventh axis J7 and the eighth axis J8. The ninth distance L9 and the third distance L3 are approximately equal. The adjacent links and the arms are pivotally joined. The arms are pivotally joined.

As shown in fig. 7, the second end 38b of the second arm 38 horizontally spaced apart from the fifth axis J5 comes into contact with the arm position maintaining means 60 (61) from above the arm position maintaining means 60 (61). The arm position maintaining means 60 (61) exerts a part of force necessary for maintaining the position of the second arm 38 on the second arm 38. In this embodiment, the arm position maintaining means 60 (61) exerts an upward force on the second end 38b of the second arm 2 in a state where the load 31 is held on the table 50.

As mentioned above, the arm position maintaining means 60 and 61 are fixedly disposed on the side in the downstream carrying direction X1 and on the side of the upstream carrying direction X2, respectively, with respect to the bed 33. Since the arm position maintaining means 60 and 61 are the same in construction, only the arm position maintaining means 60 on the downstream side in the downstream carrying direction X1 with respect to the bed 33 will be described and the description of the arm position maintaining means 61 will be omitted.

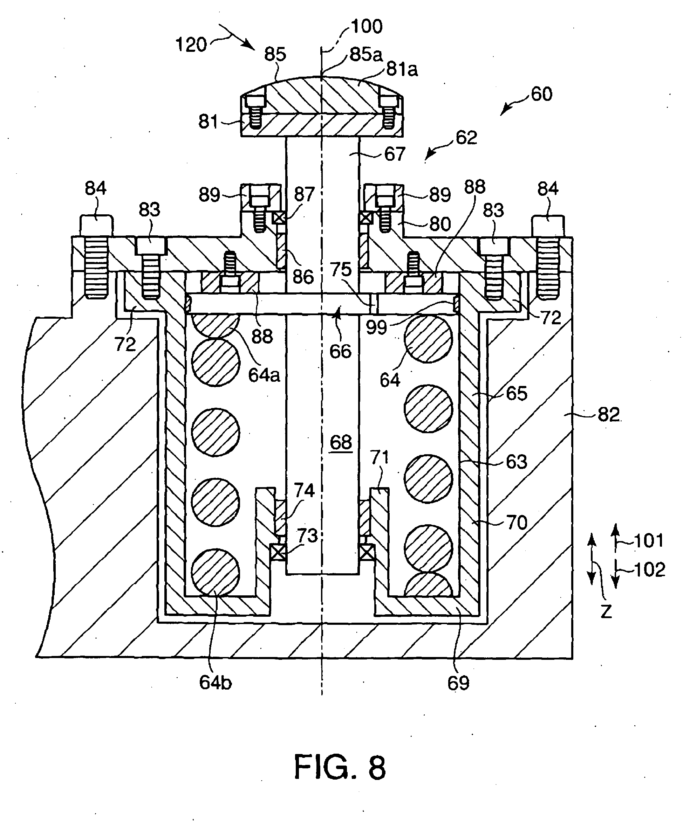

Fig. 8 is a sectional view of the arm position maintaining means 60. The arm position maintaining means 60 exerts a part of force necessary for maintaining the position of the second arm 38 on the second arm 38. The second arm 38 can be maintained in a desired position against gravitational force by forces exerted thereon by the second arm driving means 43 and the arm position maintaining means 60.

The arm position maintaining means 60 is provided with a contact member 62, a holding member 63 and a reactive force producing member 64. The contact member 62 can be moved in predetermined displacing directions, namely, vertical directions Z in the embodiment. The second arm 38 comes into contact with the contact member 62. The holding member 63 holds the contact member 62 so as to be movable in vertical directions Z. The reactive force producing member 64 exerts a reactive force corresponding to a displacement of the contact member 62 from a natural state thereof in the vertical direction Z on the contact member 62. More concretely, when the second end 38b of the second arm 38 comes into contact with the contact member 62 and displaces the contact member 62 in the vertically down ward direction Z2, the reactive force producing member 64 exerts a force corresponding to the displacement of the contact member 62 through the contact member 62 on the second arm 38.

The arm position maintaining means 60 has a predetermined reference axis 100 parallel to directions in which the contact member 62 is displaced. The contact member 62, the holding member 63 and the reactive force producing member 64 are coaxial and are aligned with the reference axis 100. In the following description, a direction in which the contact member 62 exerts a reactive force on the second arm 38 is called an upward direction 101 and a direction in which the second arm 38 exerts force on the contact member 62 is called a downward direction 102.

The holding member 63 is formed in a cylindrical shape having an axis aligned with the reference axis 100. A part of the contact member 62 projects from the holding member 63 and the other part of the same extends in a space in the holding member 63. The contact member 63 has a flange 66, an upper stem 67 projecting from the holding member 63, a lower stem 68 and a contact head 81. The flange 66, the upper stem 67, the lower stem 68 and the contact head 81 are aligned with the reference axis 100 when the contact member 62 is held by the holding member 63.

The flange 66 is a circular plate having a circumference contiguous with the inner circumference 65 of the holding member 63. The upper stem 67 extends in the upward direction 101 from the flange 66. The upper stem 67 is cylindrical and has a diameter smaller than that of the flange 66. When the flange 66 is placed in the holding member 63, the upper stem 67 projects from the holding member 63. The lower stem 68 extends in the downward direction 102 from the flange 66. The lower stem 68 is cylindrical and has a diameter smaller than that of the flange 66.

The contact head 81 is on the upper end of the upper stem 67. The second arm 38 comes into contact with the contact head 81. The contact head 81 is formed in a circular plate of a diameter greater than that of the upper stem 67. The contact head 81 has an upward convex, curved position maintaining contact surface 85. The second arm 38 comes into contact with the position maintaining contact surface 85. The position maintaining contact surface 85 has a top point 85a on the reference axis 100. The position maintaining contact surface 85 is a curved surface or a spherical surface.

A contact part 81a forming the position maintaining contact surface 85 is made of a synthetic resin having a shock absorbing property and exerting a low frictional resistance on the second arm 38, such as nylon 6. Thus shocks of the impact of the second arm 38 on the contact head 81 can be absorbed. Further more, the second arm 38 can smoothly slide on the position maintaining con tact surface 85. The contact part 81a is fastened to the other part of the contact head 81 with bolts and is detachable. The worn out contact part 81a can be replaced with a new contact part 81a.

The holding member 63 has an outer tube 70, a bottom wall 69, an inner tube 71 and a flange 72. The outer tube 70, the bottom wall 69, the inner tube 71 and the flange 72 have axes aligned with the reference axis 100. The outer tube 70 is cylindrical. The inner tube 71 is disposed inside the outer tube 70. The bottom wall 69 is joined to the lower ends of the outer tube 70 and the inner tube 71. The bottom wall 69 is continuous with the inside surface of the outer tube 70 and the outside surface of the inner tube 71. The bottom wall 69 has an annular shape. The inner tube 71 has an axial size shorter than that of the outer tube 70.

The flange 72 projects radially outward from the upper end of the outer tube 70. The inside surface of the outer tube 70 faces the circumference of the flange 66 of the contact member 62. The inside diameter of the outer tube 70 and the diameter of the flange 66 are approximately equal to each other. In this embodiment, a sealing member 99 is attached to the flange 66 to seal a gap between the outer tube 70 and the flange 66. The inside surface of the inner tube 71 faces the surface of the lower stem 68 of the contact member 62. The inside diameter of the inner tube 71 and the diameter of the lower stem 68 are approximately equal to each other. The lower stem 68 extends in a space surrounded by the inner tube 71.

A cover 80 is fastened to the flange 72. The cover 80 is a ring having an axis aligned with the reference axis 100. The cover 80 covers the upper open end of the outer tube 70. The cover 80 is provided with an opening through which the upper stem 67 extends. The diameter of the opening of the cover 80 is approximately equal to the diameter of the upper stem 67 and smaller than the respective diameters of the flange 66 and the contact head 81. The cover 80 is fastened to the flange 72 and the upper stem 67 is passed through the opening of the cover 80. Thus the contact member 62 is restrained from separating from the holding member 63. The holding member 63 and the cover 80 are detachably fastened together with screws 83 or bolts. The upper stem 67 of the contact member 62 is extended through the opening of the cover 80 and the lower stem 68 of the contact member 62 is inserted into the inner tube 71. The contact member 62 is movable in the vertical directions Z.

The reactive force producing member 64 is, for example, a compression coil spring 64. The compression coil spring 64 is contained in the outer tube 70 and has an axis aligned with the reference axis 100. The compression coil spring 64 has a lower end 64b seated on the bottom wall 69 and an upper end 64a pressed against the flange 66. The compression coil spring surrounds the lower stem 68 entirely. The compression coil spring 64 is compressed in the holding member 63. Thus the compressed compression coil spring 64 exerts an upward force in the upward direction 101 on the flange 66. The flange 66 pushed by the compression coil spring 64 comes into contact with the cover 80 to restrain the contact member 62 from separating from the holding member 63.

In a natural state, the flange 66 is pressed against the cover 80 by the compression coil spring 64 and the contact member exerts force on the cover 80 in the upward direction Z1. When the second arm 38 comes into contact with the contact member 62 and exerts a downward force on the contact member 62, the contact member 62 is displaced downward against the resilience of the compression coil spring 64. When the contact member 62 is thus displaced downward, the contact member 62 exerts an upward force equal to the product of a displacement $x$ in the downward direction 102 and the spring constant $k$ of the compression coil spring 64 on the second arm 38.

In this embodiment, the force to be exerted by the contact member 62 on the second arm 38 is changeable. For example, a spacer, namely, a space adjusting member, may be interposed between the flange 72 and the cover 80. The spacer increases the axial distance between the holding member 63 and the cover 80 in a natural state and thus the pressure exerted by the compression coil spring 64 on the contact member 62 can be adjusted. The force exerted on the second arm 38 by the contact member 62 may be adjusted by a method that adjusts the position of the bottom wall 69 relative to the cover 80. For example, it is possible to cope with the change of the load 31 by changing the force exerted by the compression coil spring 64 on the contact member 62 according to the weight of the load 31, which improves the flexibility of the carrying robot.

A support means 82 for supporting the arm position maintaining means 60 is connected to the bed 33. The arm position maintaining means 60 is detachably fastened to the support means 82 with screws 84 or bolts. The arm position maintaining means 60 fastened to the support means 82 is held at a predetermined position at a distance in the carrying direction X from the bed 33. Therefore, the positional relation between the arm position maintaining means 60 and the robot does not need to be adjusted at the operating site where the carrying robot is used and hence teaching work can be curtailed.

A bearing 86 and a sealing member 87 are disposed between the cover 80 and the upper stem 67. More concretely, the sliding bearing 86 and the sealing member 87 are fitted in the opening of the cover 80 such that the sealing member 87 is disposed above the sliding bearing 86. A bearing 74 and a sealing member 73 are disposed between the inner tube 71 and the lower stem 68. More concretely, the sliding bearing 74 and the sealing member 73 are fitted in the inner tube 71 such that the sealing member 73 is disposed below the sliding bearing 74. The sliding bearings 86 and 74 employed in this embodiment contain a lubricant and can bear heavy load. The sliding bearings 86 and 74 do not need lubrication. The sealing members 87 and 73 prevent the entry of dust in the holding member 63. The sealing members 87 and 73 are, for example, oil seals. The interior space of the holding member 63 is sealed by the sealing members 87 and 73.

Thus the contact member 62 is supported in the two sliding bearings 86 and 74 arranged in the direction of displacement of the contact member 62 on the holding member 63. The sliding bearings 86 and 74 ensure the smooth displacement of the contact member 62 even if the second arm 38 comes into contact with contact member 62 from an oblique direction 120 inclined to the reference axis 100. Thus the exertion of a resistive force against the displacement of the contact member in the displacing direction by the holding member 63 can be suppressed. Therefore, an upward force can be surely exerted on the second arm 38 even if the second arm 38 comes into contact with the contact member 62 from the oblique direction 120.

Upper shock absorbing members 88 are attached to parts facing the flange 66 of the cover 80. The upper shock absorbing members 88 are made of a synthetic resin, such as 6-nylon. The upper shock absorbing members 88 are arranged at equal angular intervals about the reference axis 100. The flange 66 collides against the upper shock absorbing members 88 when the downward force exerted on the contact member 62 by the second arm 38 is removed. The shock absorbing members 88 can attenuate noise and shocks resulting from the collision of the flange 66 against the shock absorbing members 88.

A plurality of lower shock absorbing members 89 are attached to parts facing the contact head 81 of the contact member 62 of the cover 80. The lower shock adsorbing members 89 are made of a synthetic resin, such as 6-nylon and are arranged at equal angular intervals about the reference axis 100. It is possible that the contact head 81 collides against the cover 80 when a downward force is exerted on the contact member 62. In this embodiment, the contact head 81 collides against the lower shock absorbing members 89. The lower shock absorbing members 89 can absorb noise and shocks resulting from the collision.

Preferably, the contact member 62 has a damping ability. The damping ability can prevent the sudden displacement of the contact member 62 in the displacing direction when force is exerted on the contact member 62. Thus vibrations can be suppressed when the contact member 62 collides against the holding member 63. Since the interior space of the holding member 63 is sealed by the sealing members 87 and 73, it is preferable to form a through hole 75 in the flange 66 so that an upper space extending over the flange 66 and a lower space extending under the flange 66 can communicate with each other by means of the through hole 75. When the through hole 75 is formed in a proper size, the flow of air between the upper space extending over the flange 66 and the lower space extending under the flange 66 through the through hole 75 can be properly restricted. Thus a damping function can be exercised by a simple mechanism. The damping function prevents the sudden movement of the contact member 62. Other mechanism having a damping function may be used. The damping function can suppress the vibration of the contact member 62 when the force exerted on the contact member 62 changes.

When the load 31 is heavy, a compression coil spring having a large spring constant $k$ is used as the reactive force producing member 64 to bear the heavy weight of the load 31. In this embodiment, impact applied to the cover 80 by the flange 66 of the contact member 62 on the cover 80 can be damped by the damping function of the contact member 62 even if the second arm 38 is distanced for a short time from the contact member 62. The lower shock absorbing members 89 can further reduces the impact.

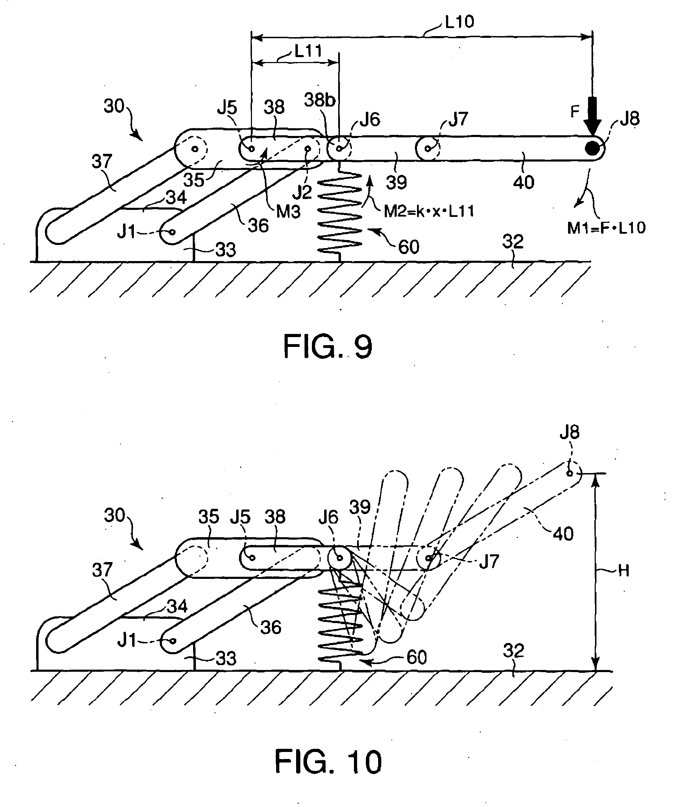

Fig. 9 is a schematic plan view of the carrying robot 30 of assistance in explaining force to be exerted on the second arm 38. When the table 50 holding the load 31 is moved to a position horizontally spaced from the fifth axis J5, the gravity produces a first torque M1 acting on the second arm 38 about the fifth axis J5. The first torque M1 exercises an effort to move the second end 38b of the second arm 38 downward. Suppose that the arms are light as compared with the load 31. Then, the first torque M1 is equal to $F \times L10$, where F is the weight of the load 31 and L10 is the horizontal distance between the fifth axis J5 and the eighth axis J8. Thus the first torque M1 increases with the increase of the distance between the table 50 and the fifth axis J5 and with the increase of the weight of the load 31.

When the second arm 38 comes into contact with the contact member 62 of the arm position maintaining means 60 and displaces the contact member 62 downward, the arm position maintaining means 60 applies a second torque M2 to the second arm 38. The second torque M2 exercises an effort to move the second end 38b of the second arm 38 upward. The second torque $M2 = -k \cdot x \cdot L11$, where $k$ is the spring constant of the compression coil spring 64, $x$ is a deflection from an axial length of the compression coil spring 64 in an natural state where any force is not acting on the compression coil spring 64 caused by the second arm 38, and L11 is the horizontal distance between the fifth axis J5 and a point in contact with the contact member 62 on the second arm 38. The direction of action of the second torque M2 is opposite that of the first torque M1.

Since the arm position maintaining means 60 applies the second torque M2 to the second arm 38, the second arm driving means 43 can maintain the position of the second arm 38 by only a force necessary to produce a third torque M3 = M1 - M2. If the carrying robot 30 is not provided with the arm position maintaining means 60, the second arm driving means 43 needs to produce a force necessary for producing a torque that can balance the first torque M1. This force is higher than a force needed to be produced by the second arm driving means 43 when the carrying robot 30 is provided with the arm position maintaining means 60.

Thus, in this embodiment provided with the arm position maintaining means 60, the position of the second arm 38 can be maintained by the second arm driving means 43 having a small driving force in a state where the load 31 is horizontally moved. The position of the second arm 38 can be maintained even if the second arm 38 has a low rigidity. Similarly, the arm position maintaining means 60 enables the first arm driving means 42 having a low driving force to maintain the position of the first arm 36 even if the first arm 36 has a low rigidity.

When the load 31 is transferred from the carrying robot 30 to the carrying robot 30 on the downstream side in the downstream carrying direction X1, the first torque M1 is removed from the second arm 38. Then, the second arm driving means 43 is required to apply a downward force to the second arm 38 to press the second end 38b of the second arm 38 downward against the second torque M2. If the force applied by the second torque M2 to the second arm 38 is higher than the driving force of the second arm driving means 43, the position of the second arm 38 cannot be maintained and the second arm 38 vibrates. Therefore, it is desirable to determine the spring constant $k$ and the deflection $x$ of the compression coil spring 64, and the horizontal distance L11 between the fifth axis J5 and a point in contact with the contact member 62 on the second arm 38 so that the force producing the second torque M2 is lower than the maximum driving force of the second arm driving means 43.

Such a condition applies similarly to the first arm driving means 42. The respective weights of the arms and the weight of the carrying robot 30 are neglected in the foregoing description. Practically, it is preferable to take the weight of the carrying robot into consideration in determining the spring constant **k** and the deflection **x** of the compression coil spring 64, and the horizontal distance L11 between the fifth axis J5 and a point in contact with the contact member 62 on the second arm 38.

The contact head 81 of the arm position maintaining means 60 of this embodiment is movable in the vertical directions Z. Therefore, the arm position maintaining means 60 can apply a force for maintaining the position of the second arm 38 to the second arm even if a taught contact point where the second arm 38 is expected to come into contact with the contact head 81 is slightly off in the vertical direction Z. Thus the allowable range for a position where the second arm 38 comes into contact with the arm position maintaining means 60 is wide and a teaching operation for teaching the second arm 38 is simple.

The second arm driving means 43 applies a driving force continuously to the second arm 38 while a force is applied to the second arm 38 by the arm position maintaining means 60. Therefore, a control method of controlling the second arm driving means 43 does not need to be greatly changed before and after the second arm 38 comes into contact with the arm position maintaining means 60 and the first arm driving means 42 and the second arm driving means 43 can be easily controlled.

Fig. 10 is a front elevation of the carrying robot 30 in a state where the first arm 36 and the second arm 38 are held in positions, respectively; and the third arm 39 and the fourth arm 40 are displaced coordinately. In this embodiment, the third arm 39 and the fourth arm 40 are connected to the second arm 38. The third arm 39 and the fourth arm 40 can be coordinately operated for displacement relative to the second arm 38 and the third arm 39, respectively.

Thus, the table 50 at an optional height H can be horizontally displaced as shown in Fig. 10 with the second arm 38 kept in contact with the contact member 62 of the arm position maintaining means 60. The table 50 holding the load 31 can carry the load 31 long distance in the horizontal direction because the arm position maintaining means 60 applies an upward force to the second arm 38.

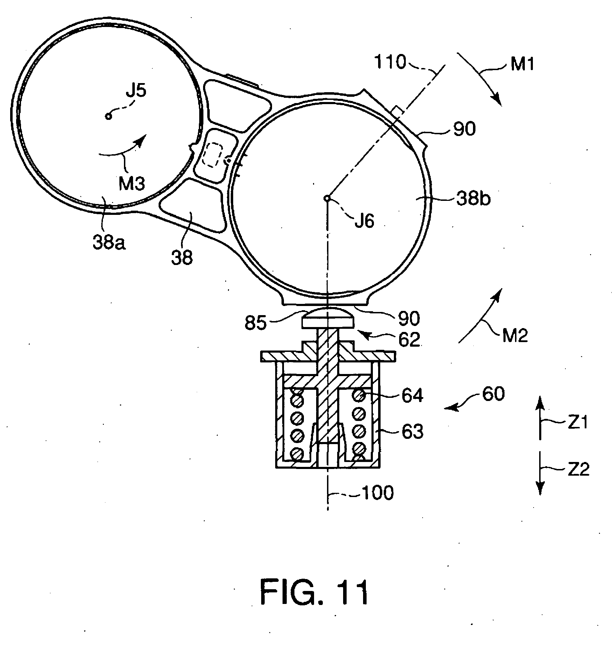

Fig. 11 is a sectional view of the second arm 38 and the contact member 62 included in the arm position maintaining means 60 and in contact with the second arm 38. The second arm 38 has flat contact surfaces 90 that come into contact with the contact member 62. Each of the contact surfaces 90 is perpendicular to a radius 110 crossing the sixth axis J6 and perpendicular to the sixth axis J6. The contact surface 90 is finished in a smooth surface so that the contact surface 90 can slide smoothly along the position maintaining contact surface 85 of the contact member 62. The contact surface 90 is formed such that the radius 110 is aligned with the reference axis 100 on the arm position maintaining means 60 when the second arm 38 comes into contact with the contact member 62.

The second arm 38 comes into contact with either of the arm position maintaining means 60 on the downstream side in the downstream carrying direction X1 and the arm position maintaining means 61 on the upstream side in the upstream carrying direction X2. The contact surfaces 90 are formed so as to correspond to the arm position maintaining means 60 and 61, respectively.

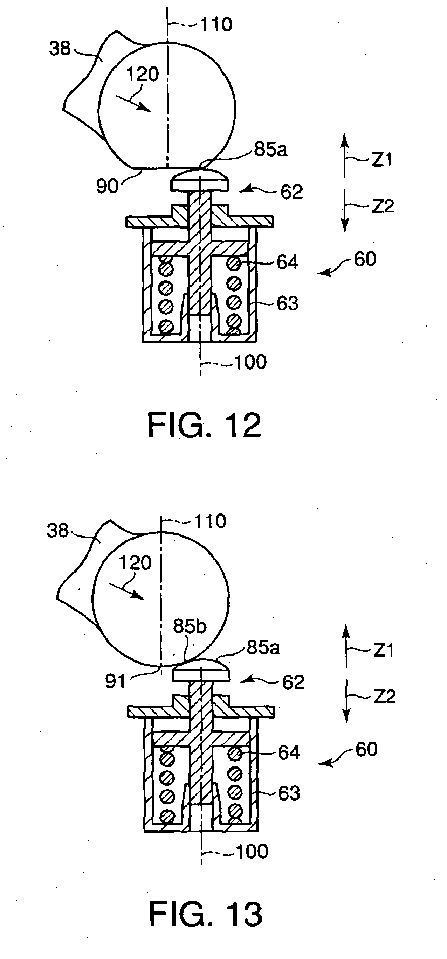

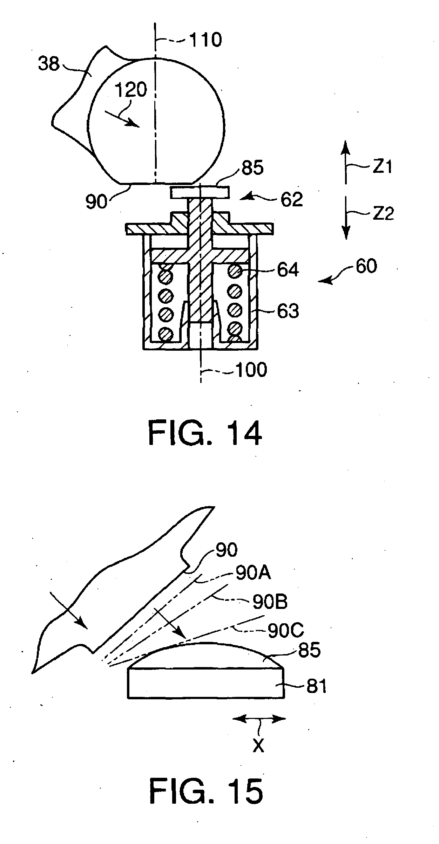

Fig. 12 is a sectional view of assistance in explaining a state where a second end 38b of the second arm 38 is obliquely approaching the arm position maintaining means 60. Fig. 13 is a sectional view of assistance in explaining a state where a second end 38b of a second arm 38 is obliquely approaching the arm position maintaining means 60 in a first comparative example. Fig. 14 is a sectional view of assistance in explaining a state where a second end 38b of a second arm 38 is obliquely approaching an arm position maintaining means 60 in a second comparative example.

In some cases, the second end 38b of the second arm 38 approaches the contact member 62 from the oblique direction 120 inclined to the reference axis 100 on the arm position maintaining means 60 to curtail carrying time. In such a case, the flat contact surface 90 comes into contact with a point near the top point 85a of the position maintaining contact surface 85 as shown in Fig. 12. As the second arm 38 is further displaced, the contact surface 90 in point or line contact with the point near the top point 85a slides and the radius 110 is aligned with the reference axis 100 on the arm position maintaining means 60.

If the contact surface 90 is a spherical surface, the contact surface 90 comes into contact with a point 85b apart from the top point 85a of the position maintaining contact surface 85 as shown in Fig. 13. As the second arm 38 is further displaced, the second end 38b of the second arm 38 pushes the contact member 62 horizontally. In such a case it is possible that the contact member 62 cannot be smoothly displaced in the displacing direction.

If the position maintaining contact surface 85 is a flat surface, the contact surface 90 of the second arm 38 slides in flat contact with the position maintaining contact surface 85 as shown in Fig. 14. A moving route for the second arm 38 needs to be accurately taught to keep the contact surface 90 of the second arm 38 parallel to the position maintaining contact surface 85, which requires difficult teaching work.

In this embodiment, the position maintaining contact surface 85 is curved and the contact surface 90 of the second arm 38 is flat as shown in Fig. 12. Therefore, the horizontal force that acts on the contact member 62 and the impact exerted on the contact member by the second arm 38 when the contact surface 90 comes into contact with the contact surface 85 are less than those exerted on the contact member 62 in the comparative example 1. Consequently, the life of the arm position maintaining means 60 can be extended. Teaching work for teaching a moving route for the second arm 38 in this embodiment is simpler than that in the comparative example 2. It is possible that the second arm 38 comes into contact with the contact member 62 at a contact position of the desired contact position when the load 31 carried by the carrying robot 30 is heavy. The allowable range for the contact position is wide and an upward force can be surely applied to the second arm 38.

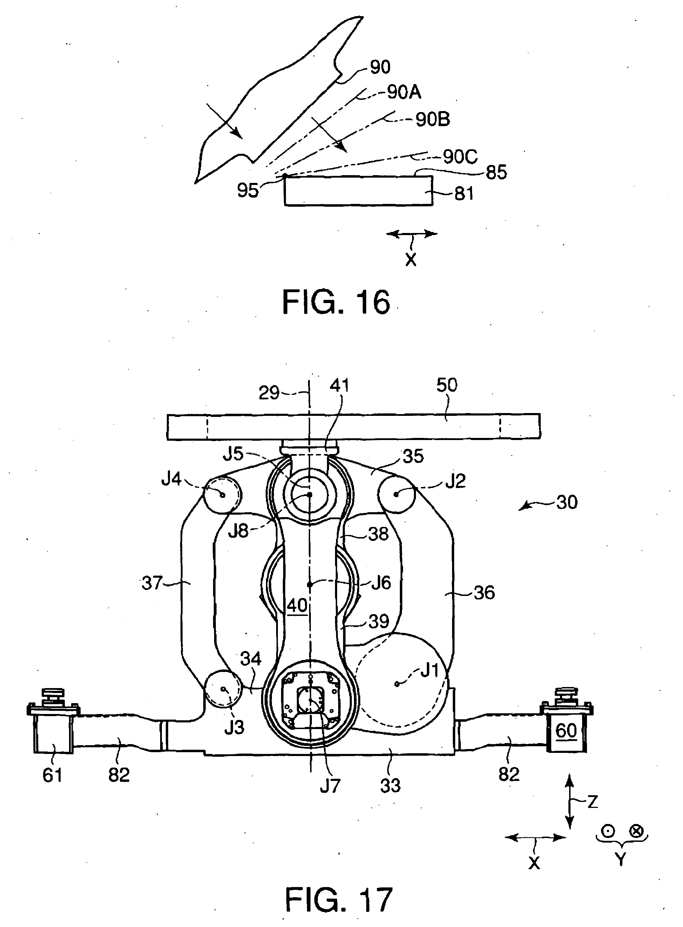

Fig. 15 is an enlarged view of the second arm before coming into contact with the arm position maintaining means and Fig. 16 is an enlarged view of the second arm before coming into contact with the arm position maintaining means in the second comparative example. The second arm 38 in this embodiment is moved in coordination with the first arm 36 such that the inclination of the contact surface 90 of the second arm 38 to a horizontal plane decreases gradually and the contact surface 90 becomes parallel to the horizontal plane as the second arm 38 moves in the carrying direction X. In Figs. 15 and 16, two-dot chain lines 90A, 90B and 90C typically indicate the contact surface 90 approaching the contact head 81.

When the position maintaining contact surface 85 is curved and does not have any sharp edges as shown in Fig. 15, the second arm 38 can be smoothly moved to a predetermined position after the contact surface 90 has come into contact with the position maintaining contact surface 85. On the other hand, when the position maintaining contact surface 85 is flat as shown in Fig. 16, it is possible that the contact surface 90 of the second arm 38 comes into contact with the edge 95 of the position maintaining contact surface 85. If the contact surface 90 comes into contact with the edge 95 of the position maintaining contact surface 85, the second arm 38 and the arm position maintaining means 60 vibrate, and the position maintaining contact surface 85 may possibly be damaged. Impact on the second arm 38 and the arm position maintaining means 60 can be reduced by curving the position maintaining contact surface 85 as shown in Fig. 15. Consequently, carrying speed can be increased to curtail carrying time.

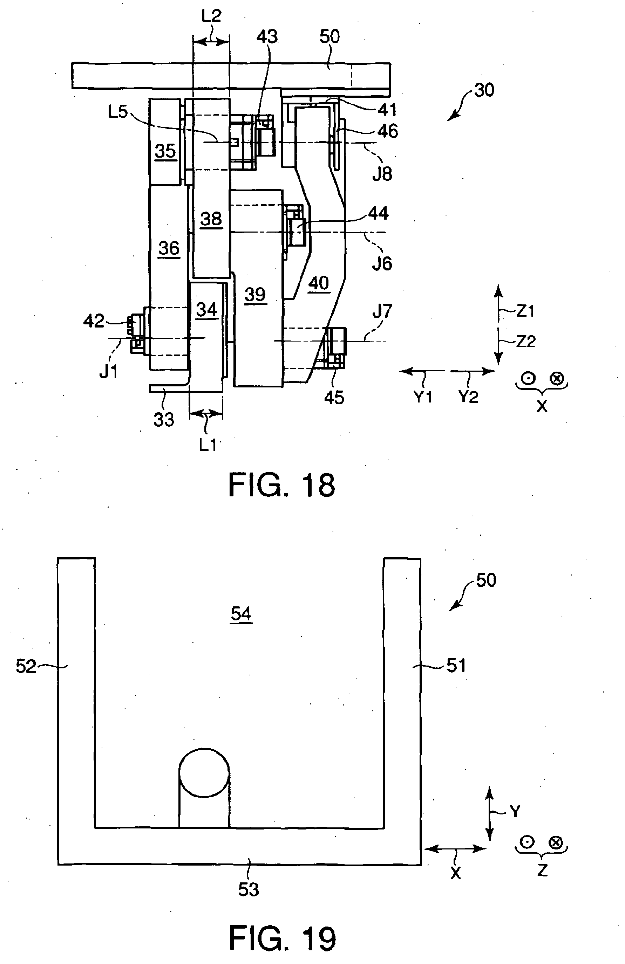

Figs. 17 and 18 are a front elevation and a side elevation, respectively, of the carrying robot 30 in a reference position. When the carrying robot 30 is set in the reference position, the axes J5 to J7 are on a vertical imaginary line 29 bisecting a line extending between the first axis J1 and the third axis J3 as shown in Fig. 17.

As shown in Fig. 18, the lower link 34 rises in the upward direction Z1 from the bed 33. Suppose that the transverse directions Y are perpendicular to both the carrying directions X and the vertical directions Z. Then, the first arm 36 and the auxiliary link 37 are on the side in the transverse direction Y1 of the lower link 34, the second arm 38 is on the side in the transverse direction Y2 of the first arm 36, the third arm 39 is on the side in the transverse direction Y2 of the second arm 36, and the fourth arm 40 is on the side in the transverse direction Y2 of the third arm 39. In this embodiment, the width L1, namely, a dimension in the transverse direction, of the lower link 34 is approximately equal to the width L2, namely, a dimension in the transverse direction, of the second arm 38. The lower link 34 is disposed between the first arm 36 and the third arm 39. Since the third arm 39 and the fourth arm 40 are displaced in the transverse direction Y relative to the second arm 38, the third arm 39 and the fourth arm 40 can be displaced even in a state where the second arm 38 is in contact with the arm position maintaining means 60.

Fig. 19 is a plan view of a table 50. The table 50 is substantially U-shaped. The table 50 has a pair of arms 51 and 52 extending in the transverse direction Y when the table 50 is mounted on the position adjusting member 41, and a connecting member 53 connecting the corresponding end of the arms 51 and 52. The table 50 defines a space 54 opening in the transverse direction Y1 and the vertical directions Z. The position adjusting member 41 is joined to a middle part of the connecting member 53 of the table 50. The position adjusting member 41 may be provided with a holding mechanism for holding the load 31. The control means 55 controls the holding mechanism to hold the load 31 and to release the load 31.

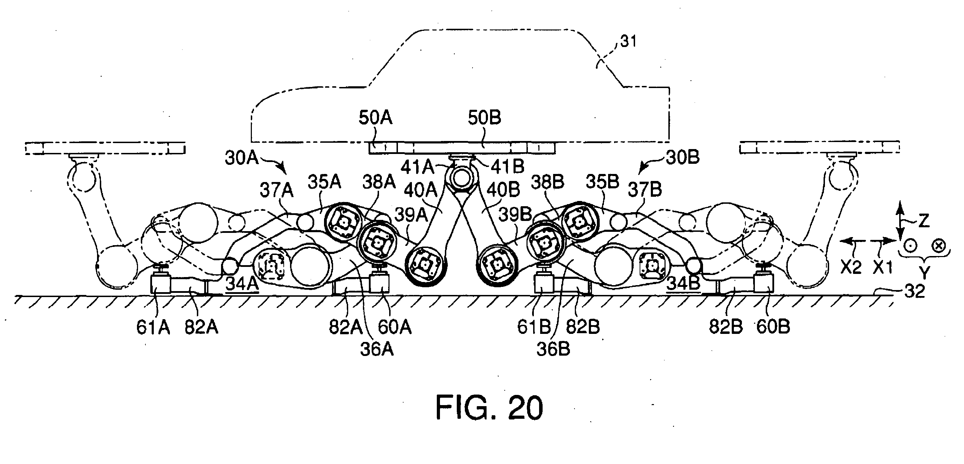

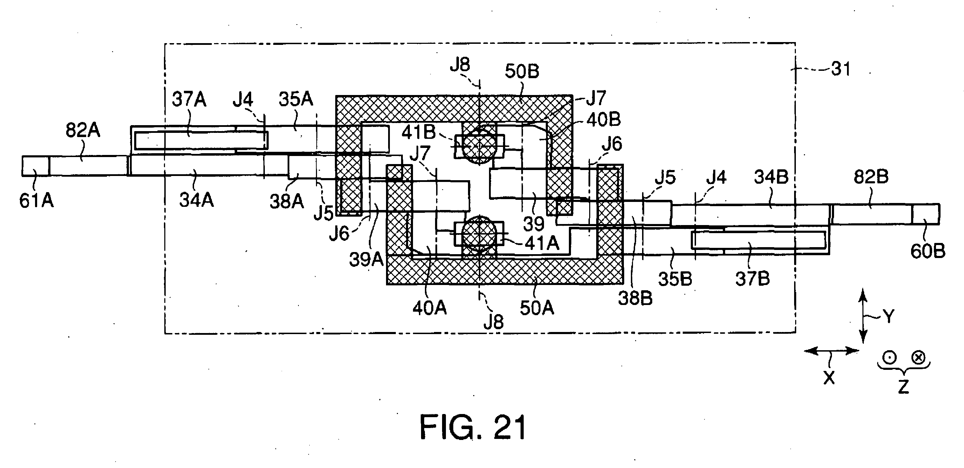

Fig. 20 is a front elevation of two carrying robots 30A and 30B in a state where a load 31 is being transferred from one of the carrying robots 30A and 30B to the other and Fig. 21 is a plan view of the two carrying robots 30A and 30B during load transfer operation. The two carrying robots 30A and 30B are identical with the foregoing carrying robot 30. The carrying robot 30A is on the upstream side in the upstream carrying direction X2 and the carrying robot 30B is on the downstream side in the downstream carrying direction X1

The plurality of carrying robots 30A and 30B are used when the carrying route extends beyond the limit of a carrying range in which the carrying robot 30 can carry the load 31. The carrying robots 30A and 30B are arranged along the carrying route at an interval. The upstream carrying robot 30A in the direction X2 carries the load 31 in the downstream carrying direction X1 and transfers the load 31 to the downstream carrying robot 30B, and then the downstream carrying robot 30B carries the load 31 in the downstream carrying direction X1.

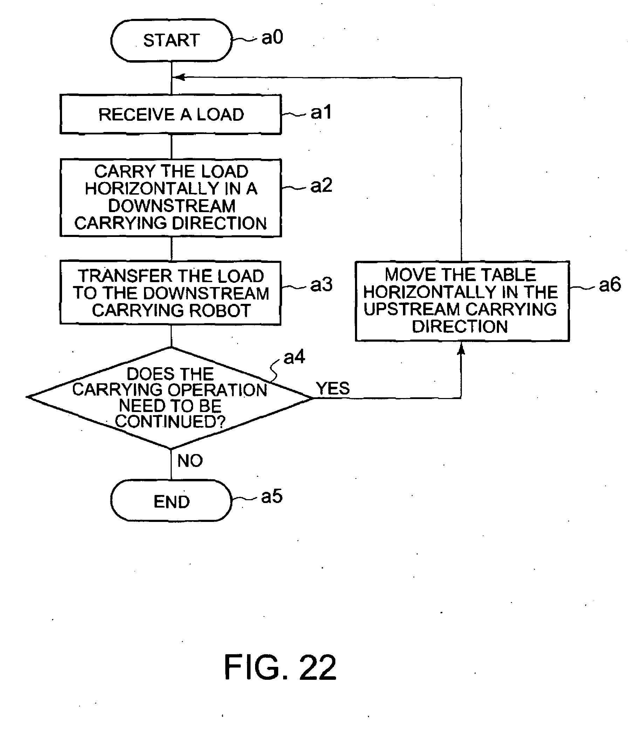

Fig. 22 is a flow chart of a carrying procedure to be carried out by the carrying robot 30 to carry the load 31. The control means 55 of the carrying robot 30 controls the driving means 42 to 46 to move the table 50 without changing the position of the table 50. A carrying instruction is given to the control means 55 in step a0, and then the control means 55 starts a carrying operation in step a1.

In step a1, the controller 55 controls the driving means 42 to 46 to move the table 50 to a receiving position on the upstream side in the upstream carrying direction X2. Upon the arrival of the table 50 at the receiving position, the table 50 receives the load 31 from the carrying robot on the upstream side in the upstream carrying direction X2 and holds the load 31. Then, step a2 is executed.

In step a2, the load 31 is maintained at a predetermined height and is carried in the downstream carrying direction X1. If the load 31 needs to be machined by a machining robot during being carried, the load 31 is stopped at a machining station, the machining robot machines the load 31, and then the carrying operation is resumed to carry the load 31 in the downstream carrying direction X1 after the completion of machining. After the table 50 has been moved in the downstream carrying direction X1 to a transfer position, the control means 55 executes step a3.

In step a3, the table 50 releases the load 31, and the carrying robot transfers the load 31 to the carrying robot on the downstream side in the downstream carrying direction X1. Then, step a4 is executed. A query is made in step a4 to see whether or not the carrying operation is to be continued. If the response in step a4 is affirmative, a load receiving operation is carried out to receive another load 31 from the upstream side in the direction X2. Concretely, step a6 is executed. In step a6, the table 50 is moved horizontally in the upstream carrying direction X2 and the carrying procedure returns to step a1.

The control means 55 thus controls the driving means 42 to 46 to carry loads 31 successively from the upstream side in the upstream carrying direction X2 to the downstream side in the downstream carrying direction X1.

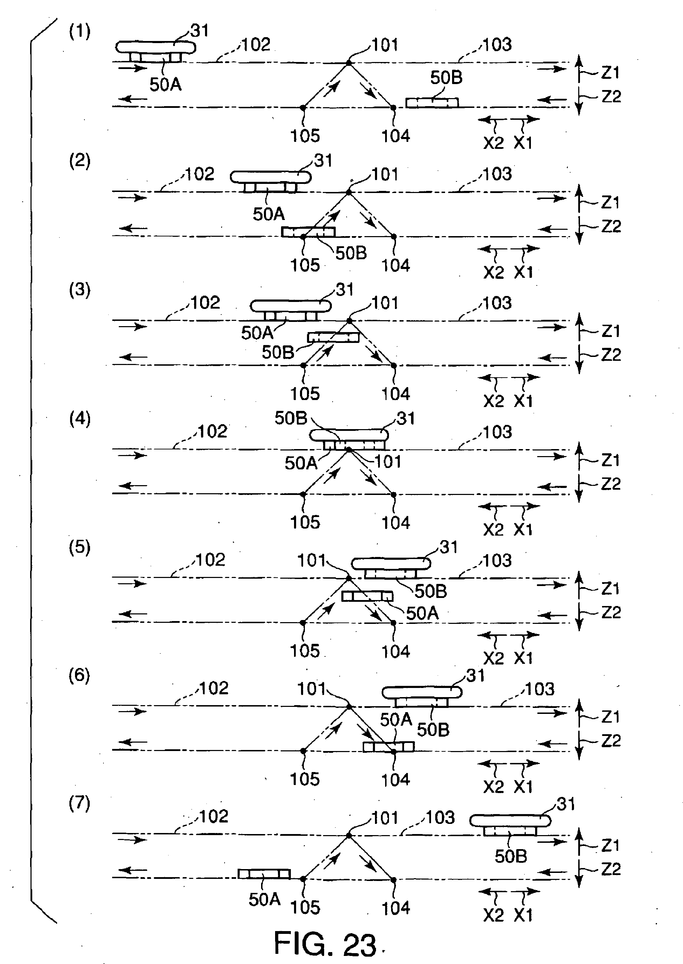

Fig. 23 is a diagrammatic view of assistance in explaining a load receiving operation for receiving the load 31 and a load transfer operation for transferring the load 31 of the carrying robot. Steps of the load receiving operation and the load transfer operation are carried out in order of Fig. 23(1) to Fig. 23(7). In Fig. 23, an upstream carrying robot 30A provided with a table 50A is on the upstream side in the upstream carrying direction X2 and a downstream carrying robot 30B provided with a table 50B is on the down stream side in the downstream carrying direction X1. A moving route for the table 50A on the upstream side in the upstream carrying direction X2 is indicted by two-dot chain lines 102 and a moving route for the table 50B on the downstream side in the downstream carrying direction X1 is indicted by chain lines 103.

A transfer position where the carrying robot 30A on the upstream side in the upstream carrying direction X2 transfers the load 31 and a receiving position where the carrying robot 30B on the downstream side in the downstream carrying direction X1 receives the load 31 are substantially at the same position 101.

As shown in Figs. 23(1) to 23(4), the upstream carrying robot 30A moves the table 50A holding the load 31 horizontally in the downstream carrying direction X1 to the transfer position 101. As shown in Figs. 23(5) and 23(6), the upstream robot 30A moves the table 50A downward from the transfer position 101 to a posttransfer position 104. The posttransfer position 104 is on the downstream side of the transfer position 101 in the downstream carrying direction X1. As shown in Fig. 23(7), the upstream carrying robot 30A moves the table 50A horizontally from the posttransfer position in the upstream carrying direction X2.

As shown in Figs. 23(1) and 23(2), the downstream carrying robot 30B maintains the table 50B in a state for receiving the load 31 thereon and moves the table 50B horizontally in the upstream carrying direction X2 to a prereceiving position 105. In this embodiment, the prereceiving position 105 is on the upstream side of the receiving position 101 in the upstream carrying direction X2. As shown in Figs. 23(3) and 23(4), the downstream carrying robot 30B moves the table 50B upward from the prereceiving position 105 to the receiving position 101. As shown in Figs. 23(5) to 23(7), the downstream carrying robot 30B moves the table 50B horizontally from the receiving position 101 in the downstream carrying direction X1.

The tables 50A and 50B are formed so as to be able to support the load 31 thereon. The tables 50A and 50B can be simultaneously positioned at the transfer position 101 and at the receiving position 101, respectively. During the receiving operation and the transfer operation, the upstream table 50A is moved horizontally toward the transfer position 101 and, at the same time, the downstream table 50B is moved to the prereceiving position 105 as shown in Fig. 23(1).

After the down stream table 50B has arrived at the prereceiving position 105 as shown in Fig. 23(2), the down stream table 50B is moved to the receiving position 101 as shown in Fig. 23(3). The upstream table 50A is moved to the transfer position 101 and the downstream table 50B is moved to the receiving position 101 so that the tables 50A and 50B may not interfere with each other. Then, the upstream table 50A releases the load 31 and the downstream table 50B is set ready to chuck the load 31.

As shown in Fig. 23(4), after the upstream table 50A and the down stream table 50B have been moved to the transfer position 101 and the receiving position 101, respectively, the respective support surfaces of the tables 50a and 50B are flush with each other. Thus the load 31 is supported on both the upstream table 50A and the down stream table 50B.

Then, as shown in Fig. 23(5), the upstream table 50A is lowered to the posttransfer position 104. Consequently, the load 31 is transferred from the upstream table 50A to the downstream table 50B. Then the downstream table 50B chucks the load 31.

Subsequently, as shown in Figs. 23(6) and 23(7), the downstream robot 30B moves the downstream table 50B horizontally in the downstream carrying direction X1. The upstream robot 30A moves the upstream table 50A to the posttransfer position 104, and then moves the upstream table 50A horizontally from the posttransfer position 104 in the upstream carrying direction X2. The load 31 is thus transferred and received by the transfer operation and the receiving operation. During the transfer operation for transferring the load 31 and the receiving operation for receiving the load 31, the arm position maintaining means 60 applies an upward force to the second arm 38 to maintain the respective positions of the first and the second arm, and the third arm 39 and the fourth arm 40 are displaced. Thus the load 31 can be transferred from one to the other table at a position remote from the bed 33 by using the second arm driving means having a low driving force. Waiting time can be reduced by the cooperative operation of the upstream and downstream robots.

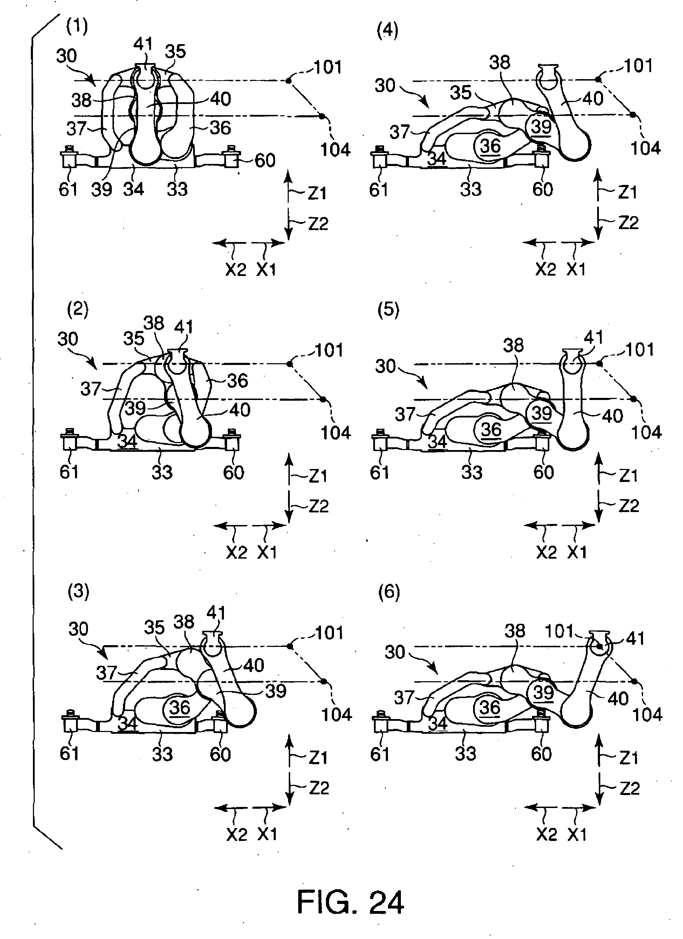

Fig. 24 is a front elevation of assistance in explaining some of operations of the carrying robot 30. The carrying robot 30 carries out steps of a table moving operation in order of Figs. 24(1) to 24(6). Fig. 24 shows steps of an operation of the carrying robot 30 holding the load 31 in the reference position to carry the load 31 to the transfer position 101.

The control means 55 carries out a control operation to make the carrying robot 30 in the reference position move the table 50 horizontally in the downstream carrying direction X1 without changing the position of the table 50. The control means 55 controls the driving means 42 to 46 to displace the first to fourth arms such that the table 50 is moved horizontally in the downstream carrying direction X1 without changing its position.

While the table 50 is being moved in the downstream carrying direction X1, the control means 55 controls the driving means 42 to 46 so that the second arm 38 may come into contact with the arm position maintaining means 60. When the second arm 38 is brought into contact with the arm position maintaining means 60 as shown in Fig. 24(4), the first arm driving means 42 and the second arm driving means 43 are controlled so as to maintain the respective positions of the first arm 36 and the second arm 38. In this state, the arm position maintaining means 60 applies an upward force to the second arm 38.

The arm position maintaining means 60 thus applies an upward force to the second arm 38 and the third arm 39 and the fourth arm 40 are displaced relative to the second arm 38 to move the table further in the downward carrying direction X1 as shown in Fig. 24(5). The control means 55 carries out control operations to move the table in the downstream carrying direction X1 to the transfer position 101 as shown in Fig. 24(6). The control means 55 reverses the foregoing procedure to move the table from the receiving position on the upstream side in the upstream carrying direction X2 to a position where the carrying robot 30 is set in the reference position.

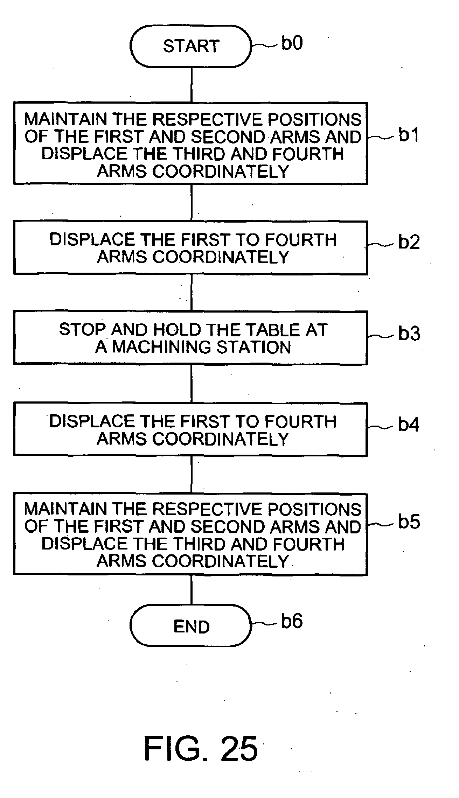

Fig. 25 is a flow chart of a control procedure to be carried out by the control means 55 in step a2 of the carrying procedure shown in Fig. 22. The carrying robot 30 receives the load 31 with an upward force applied to the second arm 38 by the arm position maintaining means 60 in step b0. Then, step b1 is executed.

In step b1, the third arm 39 and the fourth arm 40 are displaced coordinately with the position of the second arm 38 maintained to move the table 50 horizontally in the downstream carrying direction X1. Upon the arrival of the table 50 at a predetermined position near the bed 33, step b2 is executed. When the table 50 is at this predetermined position near the bed 33, the position of the second arm 38 can be maintained without the assistance of the arm position maintaining means 60.

In step b2, the control means 55 displaces the first arm 36, the second arm 38, the third arm 39 and the fourth arm 40 coordinately so as to move the table 50 horizontally in the downstream carrying direction X1. The position of the carrying robot 30 changes via the reference position to a position in which the second arm 38 is moved in the downstream carrying direction X1 beyond the bed 33. If the load 31 needs to be machined by a machining device during being carried, the table 50 is stopped at a machining station. Then, step b3 is executed.

In step b3, the carrying robot 30 is kept stationary until the machining device completes a machining operation. Step b4 is executed after the machining operation has been completed. In step b4, the control means 55 displaces the arms 36, 38, 39 and 40 coordinately to move the table 50 horizontally in the downstream carrying direction x1. Step b5 is executed after the table 50 has arrived at a predetermined position beyond the bed 33 in the downstream carrying direction X1. It is difficult to maintain the position of the second arm 38 without the assistance of the arm position maintaining means 60 when the table 50 is at the predetermined position beyond the bed 33 in the downstream carrying direction X1. When the table 50 is at the predetermined position beyond the bed 33 in the downstream carrying direction X1, the second arm 38 is in contact with the arm position maintaining means 60 and the arm position maintaining means 60 applies an upward force to the second arm 38.

In step b5, the third arm 39 and the fourth arm 40 are displaced coordinately with the respective positions of the first arm 36 and the second arm 38 maintained to move the table 50 horizontally in the downstream carrying direction X1 to the transfer position 101. Then, the control procedure goes to step b6. In step b6, the moving operation for moving the second arm 38 in the downstream carrying direction X1 is ended.

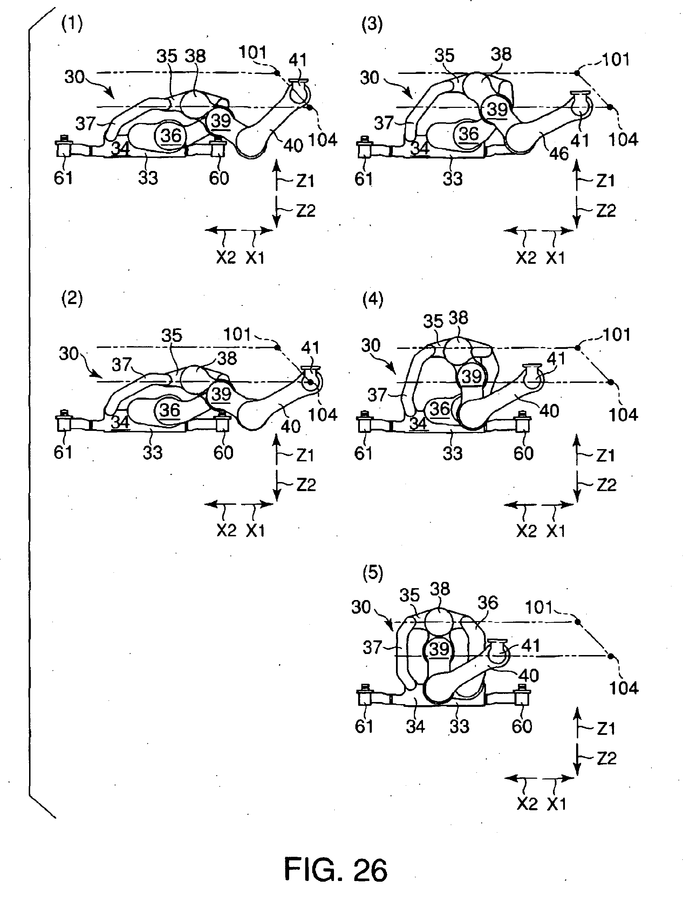

Fig. 26 is a front elevation of assistance in explaining some of operations of the carrying robot 30. The carrying robot 30 carries out steps of a table moving operation in order of Figs. 26(1) to 26(5). Fig. 26 shows a table moving operation for moving the table in the upstream direction X2 after the load 31 has been transferred to the carrying robot on the downstream side in the downstream carrying direction X1 and the table 50 has been moved beyond the transfer position 101 in the downstream carrying direction X1.

As shown in Fig. 26(1), the table 50 is lowered for a transfer motion to transfer the load 31 to the carrying robot on the downstream side in the downstream carrying direction X1 as shown in Fig. 26. After the load 31 has been transferred to the carrying robot on the downstream side in the downstream carrying direction X1, the control means 55 displaces the third arm 39 and the fourth arm 49 to lower the table 50 from the transfer position 101 to the posttransfer position 104 as shown in Fig. 26(2). Then, the table 50 is moved horizontally in the upstream carrying direction X2.

The first arm 36 and the second arm 38 are displaced during the movement of the table 50 in the upstream carrying direction X2. The second arm driving means 43 can displace the second arm 38 even if the arm position maintaining means 60 does not apply force to maintain the position of the second arm 38 to the second arm 38 because the table 50 has been unloaded. Thus, as shown in Figs. 26(3) to 26(5), the first arm 36, the second arm 38, the third arm 39 and the fourth arm 40 are displaced to move the table 50 in the upstream carrying direction X2. The control means 55 reverses the foregoing procedure to move the table 50 to the preparatory receiving position on the upstream side in the upstream carrying direction X2. The arms 36, 38, 39 and 40 may be coordinately displaced during the movement of the table 50, provided that the second arm 38 is in contact with the contact member 62 of the arm position maintaining means 60 and the arm position maintaining means 60 applies an upward force to the second arm 38 when the table 50 arrives at the posttransfer position 104 and at the preparatory receiving position 105.

The arm position maintaining means 60 is in contact with the second arm 38 and applies a part of force necessary for maintaining the position of the second arm 38 to the second arm 38 when the second end 38b of the second arm 38 is horizontally spaced apart from the upper link 35. Therefore, the driving force of the second arm driving means 43 for maintaining the position of the second arm 38 may be low; that is, the position of the second arm 38 can be maintained even if the second arm driving means 43 is driving means having a small driving capacity, and the second arm 38 may be an arm having a low rigidity. Similarly, the first arm driving means 42 may be driving means having a small driving capacity and the first arm 36 may be an arm having a low rigidity.

Thus the first arm driving means 42 and the second arm driving means 43 are small and hence the carrying robot 30 can be formed in a small size. The arm structure does not need to be as complicated as known arm structure to maintain the position of the arm. Thus the carrying robot is simple in construction and small in size and has a large load capacity.

The second arm driving means 43 exerts driving force continuously to the second arm 38 even in a state where the arm position maintaining means 60 exerts force on the second arm 38. Thus the control method of controlling the second arm driving means 43 does not need to be changed before and after the contact of the second arm 38 with the arm position maintaining means 60, and the control method is simple. Consequently, programs to be stored in the control means 55 can be easily prepared.

Since the arm position maintaining means 60 applies an upward force to the second arm 38, the load 31 can be carried to a position horizontally spaced apart from the bed 33 even if the load 31 is heavy. When the present invention is applied to a machining robot, the machining robot can be maintained in a desired position even if the machining robot is provided with a large machining head.

The contact member 62 can be displaced in the displacing direction. The force applied to the second arm 38 by the contact member 62 changes with the displacement **x** of the contact member 62. The posture of the second arm 38 can be maintained flexibly even if the weight of an end effector attached to the second arm 38 or the weight of the load 31 is changed. Since the contact member 62 can be displaced in the displacing direction, the second arm 38 can come into contact with the contact member 62 even if a position where the second arm 38 comes into contact with the contact member 62 is not accurately taught.

The upper link 35, the lower link 34, the first arm 46 and the auxiliary link 37 form a quadric crank mechanism. The second arm driving means 43, as compared with that of a robot provided with a direct-acting linkage and not provided with a quadric crank mechanism, may be driving means having a small driving capacity. When the load 31 is moved horizontally, the displacement of the second arm 38, as compared with that of a robot provided with a direct-acting linkage, may be small because the second arm 38 is displaced relative to the upper link 35. When the second arm driving means 43 is a motor, the rotating speed of the motor may be low.

The third arm 39 and the fourth arm 40 enables moving the load 31 in a low position. Therefore, the carrying robot can carry the load in a small space. If the load 31 is to be machined by another machining robot while the load 31 is being moved, the height of the machining robot may be low and the machining robot does not need to be built in a large size. The table 50, namely, an end effector, can be maintained in a fixed position by displacing the position adjusting member 41 in coordination with the displacement of the arms. Consequently, the ease of working can be improved when the robots carry and machine the load. Since the arm position maintaining means' 60 is joined to the bed 33, the carrying robot can be installed in a short time, which improves convenience.

The maximum force applied by the arm position maintaining means 60 to the second arm 38 is lower than the driving force of the second arm driving means 43. Therefore, the position of the second arm 38 can be maintained regardless of the variation of a force acting in one of opposite directions on the second arm 38, for example, a downward force. Thus the vibration of the second arm 38 can be controlled and the working performance of the robot can be improved.

The downward force acting on the second arm 38 drops upon the transfer of the load 31 from the carrying robot 30 to another robot. In such a case, the force exerted on the second arm 38 by the arm position maintaining means 60 may exceed the force exerted on the arm position maintaining means 60 by the second arm 38 if the arm position maintaining means 60 exerts force on the second arm 38. The force that can be exerted on the second arm 38 by the arm position maintaining means 60 is lower than the driving force of the second arm driving means 43. Thus the driving force of the second arm driving means 43 restrains the second arm 38 from moving upward even if the force exerted on the second arm 38 by the contact member 62 exceeds the force exerted on the contact member 62 by the second arm 38.

The change of the weight of the load 31 can be dealt with and the flexibility of the carrying robot can be improved by adjusting the force that can be exerted on the second arm 38 by the arm position maintaining means 6. The contact surface 90 of the second arm 38 is flat, the position maintaining contact surface 85 is curved, and the contact surface 90 and the position maintaining contact surface 85 are in point contact or line contact with each other. Therefore, the possibility that force acts on the arm position maintaining means 60 in a direction other than the displacing direction of the arm position maintaining means 60 can be reduced.

The sliding bearings 86 and 74 suppress the action of a deflecting force on the contact member 62 and hence the contact member 62 is displaced in the displacing direction. Thus the contact member 62 can be displaced in the displacing direction regardless of directions in which the second arm 38 approaches the contact member 62, and hence the arm position maintaining means 60 can surely exert a reactive force on the second arm 38.

The contact member 62 has a movement damping property. The damping property of the contact member 62 can prevent the sudden displacement of the second arm 38. For example, when the load 31 held by the second arm 38 is transferred to another robot while the arm position maintaining means 60 is exerting force on the second arm 38, the weight of the load 31 is removed. In such a case, the upward force exerted on the second arm 38 by the arm position maintaining means 60 may exceed the force exerted on the arm position maintaining means 60 by the second arm driving means 43 for a moment. Even under such a condition, the contact member 62 can be restrained from sudden movement. Thus the second arm 38 can be restrained from being displaced upward by the arm position maintaining means 60 even immediately after the transfer of the load 31 and the second arm 38 can be restrained from vibrating. The spring constant **k** of the compression coil spring may be large and hence the load can be moved to a position horizontally remote from the bed 33 even if the load 31 has a large weight.

If the load 31 is large, it is difficult to attenuate the vibration of the arm holding the load 31. Causes of vibrations of the second arm 38 can be reduced and the load 31 can be stably carried by the movement damping property of the contact member 62. The vibration of the contact member 62 can be controlled and the second arm can be prevented from coming into contact with the vibrating contact member 62.

The foregoing embodiment specifically described above is only an example and many changes can be made therein without departing from the scope of the present invention. For example, although the invention has been described as applied to the carrying robot, the present invention is applicable to robots other than the carrying robot, such as machining robots.

Any restrictions are not placed on the arm structure of the robot. The arm position maintaining means 60 may exert force on the second arm 38 in any direction other than the upward direction.

Although the arm position maintaining means 60 of this embodiment exerts an upward force on the second arm 38, the arm position maintaining means 60 may exert position maintaining force on the arm other than the second arm 38. The base in the second arm 38 is the upper link. When the arm position maintaining means 60 exerts force on the arm other than the second arm 38, the arm on the side of the bed with respect to the arm on which force is exerted is a base.

Although the compression coil spring is used in the foregoing embodiment as the reactive force producing member 64, the reactive force producing member 64 may be any means other than the compression coil spring, such as a pneumatic spring, a rubber member, an pneumatic cylinder or a hydraulic cylinder. The compression coil spring as the reactive force producing member is simple and does not need any power. Although the foregoing embodiment has been described as applied to carrying the load 31 along the carrying route by receiving and transferring the load 31 by the plurality of carrying robots, the single carrying robot 31 may be used for carrying the load 31. A synthetic resin plate may be attached to the second arm to improve the shock absorbing property and sliding property of the second arm.

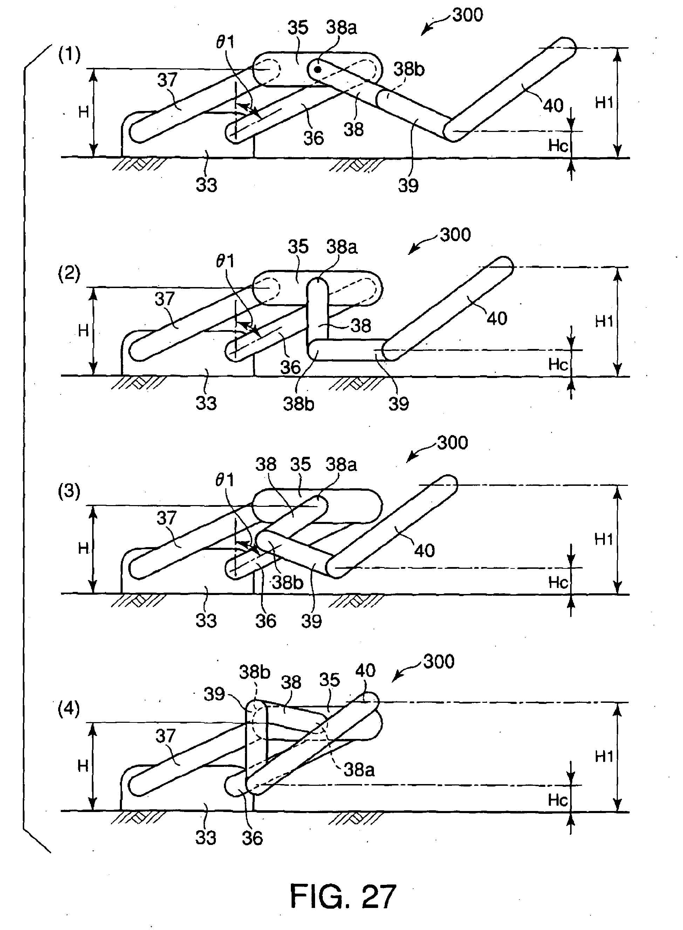

Fig. 27 is a view of assistance explaining operations of a carrying robot 300 in a second embodiment according to the present invention. The carrying robot 300 is similar in construction to the carrying robot 30 shown in Fig. 1, except that the carrying robot 300 is not provided with any means corresponding to the arm position maintaining means 60. In Fig. 27, parts like or corresponding to those of the carrying robot 30 shown in Fig. 1 are designated by the same reference characters and the description thereof will be omitted.

The carrying robot 300 has a first arm 36 inclined at a predetermined angle to a lower link 33; that is, the first arm 36 is inclined at a predetermined angle θ1 to a vertical imaginary line and is in a predetermined specific position. A second arm 38 has a first end 38a at a height H from a reference plane when the first arm 36 is in the predetermined specific position. The first arm 36, the second arm 38, a third arm 39 and a fourth arm 40 have lengths Y1, Y2, Y3 and Y4, respectively. The length of each arm is the distance between the opposite joints of the arm and the adjacent arms.

The length Y2 of the second arm is not greater than a first set value (H - Hc), where H is a vertical specific distance of a first end 38a of the second arm 38 from the reference plane when the first arm 36 is set in the specific position and Hc is a limit height Hc, namely, a lower limit height from the reference plane for the arms of the carrying robot 300.

In Fig. 27, the length Y2 of the second arm 38 is equal to the first set value (H - Hc). When the first arm 36 is set in the predetermined specific position as shown in Fig. 2, the lower limit position of a second end 38b of the second arm 38 is not below the limit height Hc. Similarly to the state shown in Fig. 2, a value (Y2 + Y3), where Y2 is the length of the second arm 38 and Y3 is the length of the third arm 39, is not greater than a value (H0 - Hc), where H0 is the height of the first end 38a of the second arm 38 from the floor surface and Hc is the limit height, in a reference position.

As shown in Figs. 27(1) to 27(4), the fourth arm 40 can be horizontally moved without changing the position of the fourth arm 40 and without lowering the arms 37 to 40 below the limit height Hc. Even in the reference position, the load can be held without reducing the respective height of the arms below the limit height Hc. The carrying robot 20A in a comparative example shown in Fig. 36 can move the load from the remotest position toward the bed if the specific height H is high. However, the arms are lowered below the limit height if the specific height H is low. This embodiment having the second arm 38 to the fourth arm 40 can move the load even if the specific height H is low; that is, the load can be carried in a low posture. The carrying robot shown in Fig. 27 can carry the load in a wide range in a state where the first arm 36 is fixed in an angular position and the robot is maintained in a low posture. Thus a return cycle can be rapidly completed and cycle time can be curtailed.

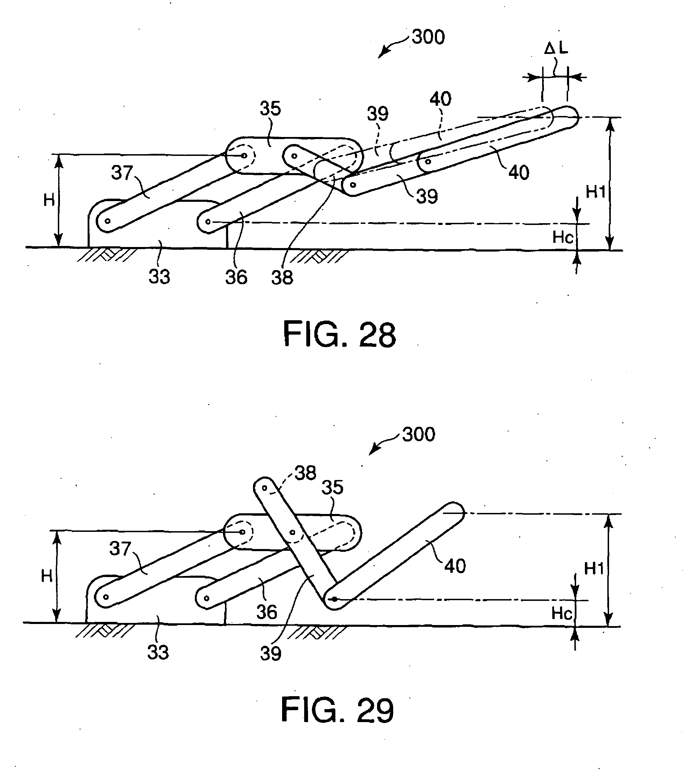

Fig. 28 is a view of assistance in comparatively explaining maximum load carrying ranges when a second arm 38 is long and when the second arm 38 is short, respectively. Under first and second set conditions mentioned hereunder, as shown in Fig. 28, in a state where the posture of the second arm 38 is fixed, the load held on the extremity of the fourth arm 40 can be carried to a position farther than a position to which the load can be carried when the length Y2 is long by a predetermined distance ∆L when the length Y2 is short.

Fig. 29 is a view showing a state where the second arm 38 is moved toward a bed when the second arm 38 is excessively short. In some cases, the third arm 39 is long as shown in Fig. 29 when the second arm 38 is excessively short. It is possible in such are state that the third arm 39 is lowered below the limit height Hc and a space in which the load can be moved is narrowed when the first arm 36 is maintained in the specific position and the fourth arm 40 is moved without changing the position thereof.

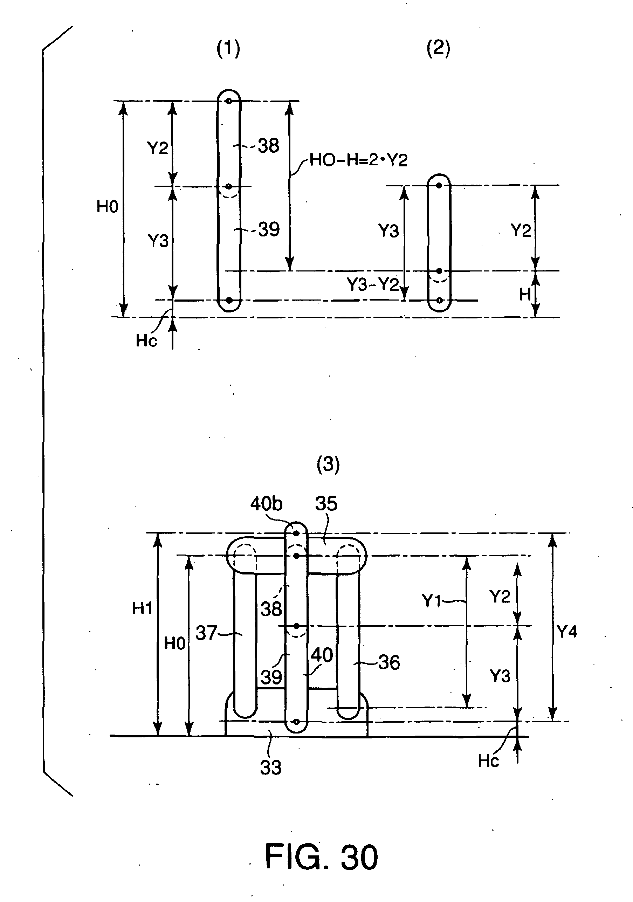

Fig. 30 is a view showing the relation between the second arm 38 and the third arm 39. Under a first set condition, a value (Y2 + Y3), where Y2 is the length of the second arm 38 and Y3 is the length of the third arm 39, is not greater than a value (H0 - Hc), where H0 is the height of the first end 38a of the second arm 38 from the floor surface and Hc is the limit height, in the reference position as shown in Fig. 30(1).

Under a second set condition, a value (Y3 - Y2), where Y2 is the length of the second arm 38 and Y3 is the length of the third arm 39, is not greater than a value (H - Hc), where H is the height of the first end 38a of the second arm 38 from the reference plane and Hc is the limit height, in the reference position as shown in Fig. 30(2). In other words, the length Y2 of the second arm 38 is not smaller than the remainder (Hc + Y3 - H) of subtraction of the height H of the first end 38a of the second arm 38 in the specific position from a value (Hc + Y3), where Hc is the limit height and Y3 is the length of the third arm 39.

Under the first and the second set condition, the length Y2 of the second arm 38 is not smaller than half a value (H0 - H), where H0 is the height of the first end 38a of the second arm 38 from the floor surface in the reference position and H is the height of the first end 38a of the second arm from the reference plane in the specific position.

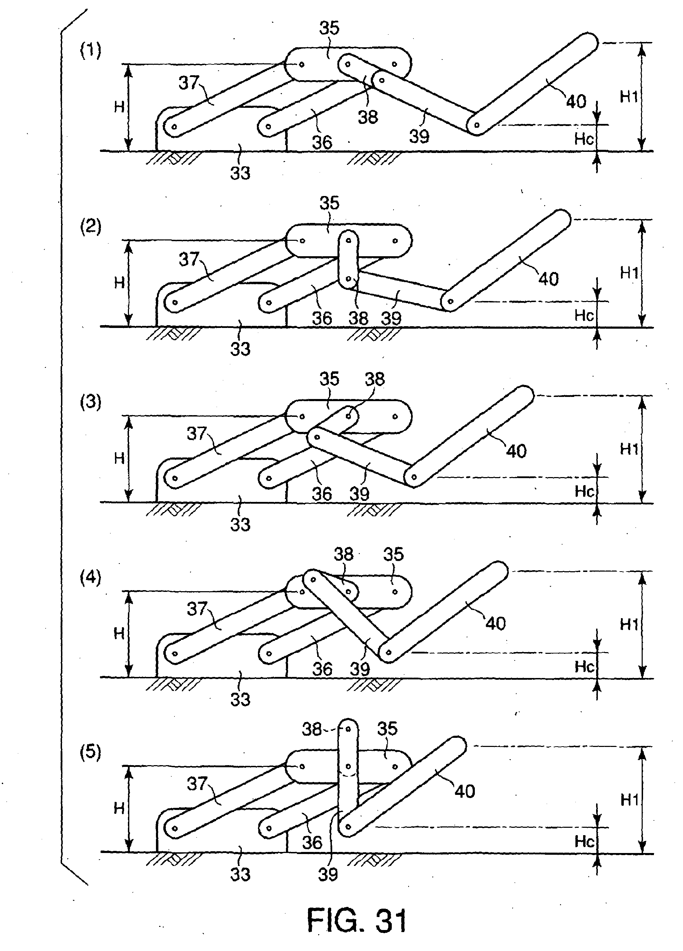

When the respective lengths of the second arm 38 and the third arm 39 are determined so as to meet the first and the second set conditions, the fourth arm 40 can be moved toward the bed without causing a state shown in Fig. 29. More concretely, the fourth arm 40 can be moved toward the bed as shown in Fig. 31.

As shown in Fig. 30(3), the length Y4 of the fourth arm 40 is expressed by: Y4 = H1 - {H0 - (Y2 + Y3)}, where H1 is the height of a first end 40a of the fourth arm 40 from the floor surface. The length Y4 of the fourth arm 40 is not greater than (H1 - Hc), where H1 is the height of the first end 40a of the fourth arm 40 and Hc is the limit height, obtained by rearranging the expression.

The sizes of the arms of the carrying robot 300 shown in Fig. 27 will be given by way of example. The respective lengths Y2, Y3 and Y4 of the second arm 38, the third arm 39 and the fourth arm 40 are 405 mm, 405 mm and 800 mm, respectively. In the reference position, the height H1 of the second end 40b of the fourth arm 40 is 1010 mm. In the reference position, the height H0 of the first end 38a of the third arm 38 is 1020 mm. The limit height Hc is 210 mm. The height H of the first end 38a of the second arm 38 from the reference plane in the reference position is 620 mm.

These sizes of the arms meet the first and the second set conditions. More concretely, the value (Y2 + Y3), where Y2 is the length of the second arm 38 and Y3 is the length of the third arm 39, is 810 mm, and the value (H0 - Hc), where H0 is the height of the first end 38a of the second arm 38 from the floor surface in the reference position and Hc is the limit height, is not greater than 810 mm.

The value (Y3 - Y2), where Y3 is the length of the third arm 39 and Y2 is the length of the second arm 38, is zero and not greater than the value (H - Hc) = 410 mm, where H is the height of the first end 38a of the second arm from the reference plane in the specific position and Hc is the limit height.

The length Y2 of the second arm 38 is 405 mm and is not smaller than half the value (H0 - Hc) = 200 mm, where H0 is the height of the first end 38a of the second arm 38 from the floor surface in the reference position and Hc is the limit height. The length Y2 of the second arm 38 is 405 mm and is not greater than the value (H - Hc) = 410 mm, where H is the height of the first end 38a of the second arm 38 in the reference position from the reference plane and Hc is the limit height.

The length Y4 of the fourth arm 40 is 800 mm equal to {H1 - H0 - (Y2 + Y3)} = 800 mm. Thus the carrying robot 300 meets all the foregoing conditions.

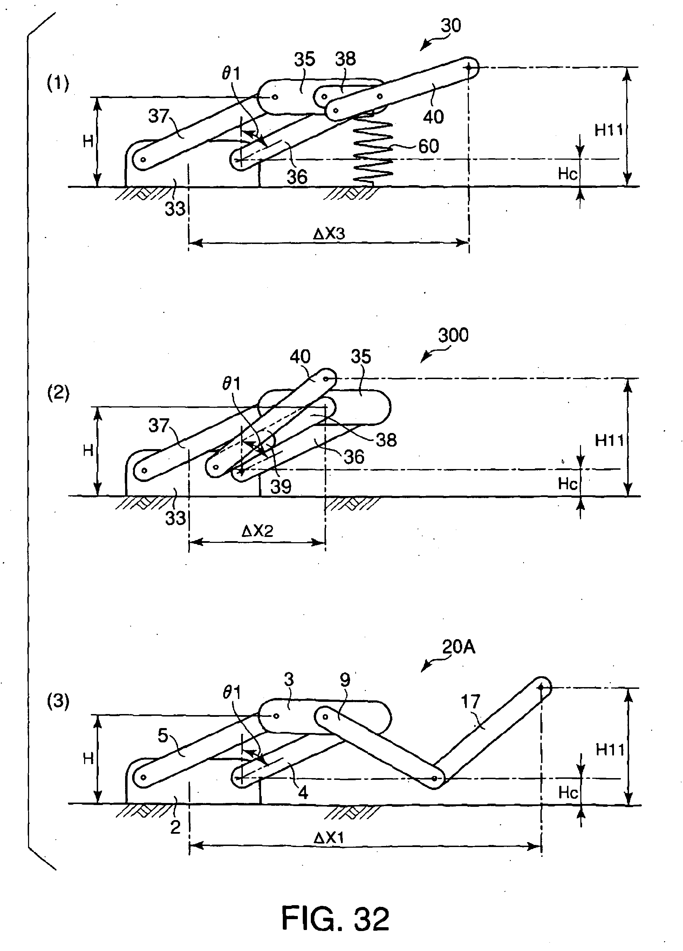

Fig. 32 is a view comparatively showing positions near bases that can be reached by the carrying robots 30 and 300 embodying the present invention. Figs. 32(1), 32(2) and 32(3) show the carrying robot shown in Fig. 1, the carrying robot 300 shown in Fig. 27 and the carrying robot 20A in a comparative example shown in Fig. 36, respectively. Suppose that sizes of the corresponding parts of the carrying robots 30, 300 and 20A are the same, the second arm 38 is maintained in a horizontal position, and the height H11 of the load is not lower than the height H of the first end 38a of the second arm 38 in the specific position.

When the carrying robot of the present invention shown in Fig. 1 meets a condition expressed by:

$$\frac{H0 - Hc + L4 - \sqrt{(H0 - Hc)^2 - (H - Hc)^2} - \sqrt{(L4)^2 - (H - Hc)^2}}{2} < L3 \le H - Hc$$

$$\dots\dots\dots(1)$$

the load is at the shortest possible distance from the carrying robot as shown in Fig. 32(1). In this state, a horizontal distance $\Delta X3$ between a reference position on the bed and the second end 40b of the fourth arm 40 is expressed by Expression (2).

$$\Delta X3 = L1 \cdot \sin\theta1 + L2 + \sqrt{(L4 - L3)^2 - (H11 - H)^2} \qquad \dots\dots\dots (2)$$

The carrying robot 300 of the present invention shown in Fig. 27 cannot move the load further toward the carrying robot when (H0 - H)/2 ≤ Y2 ≤ H - Hc. In this state, a horizontal distance $\Delta X2$ between the reference position on the bed and the second end 40b of the fourth arm is expressed by Expression (3).

$$\Delta X2 = L1 \cdot \sin\theta1 - \sqrt{(L2 + L3)^2 - (H - Hc)^2} + \sqrt{(L4)^2 - (H11 - H)^2}$$

$$\dots\dots\dots (3)$$

The carrying robot 20A in the comparative example shown in Fig. 36 cannot move the load further toward the robot in a position shown in Fig. 32(3). In this state, a horizontal distance $\Delta X1$ between a reference position on the bed and the second end 40b of the fourth arm 40 is expressed by Expression (4).

$$\Delta X1 = L1 \cdot \sin\theta1 + \sqrt{(L2 + L3)^2 - (H - Hc)^2} + \sqrt{(L4)^2 - (L11 - Hc)^2}$$

$$\dots\dots\dots (4)$$

Under the foregoing conditions, $\Delta X2 < \Delta X3 < \Delta X1$. The carrying robots 30 and 300 of the present invention can move the load closer thereto than the carrying robot 20A in the comparative example. Thus the carrying robot of the present invention can carry the load in a low position with the first arm 36 disposed at a predetermined position without changing the position of the fourth arm 40. In the reference position, the arms 36 and 38 to 40 are not lowered below the limit height Hc.

Although the preferred embodiments of the present invention have been described specifically with a certain degree of particularity, obviously many changes are possible therein.

**Claims**

1. A robot arm structure for a carrying robot (30), comprising:

   a bed (33) installed on a predetermined reference plane;
   a lower link (34) disposed on the bed (33);
   an upper link (35) disposed above the lower link (34);
   a first arm (36) joining the lower link (34) and the upper link (35) so as to be capable of being displaced relative to the upper link and the lower link;
   an auxiliary link (37) joining the lower link (34) and the upper link (35) so as to be capable of being displaced relative to the upper link and the lower link;
   a second arm (38) having a first end (38a) and a second end (38b), the first end being joined to the upper link (35), the second arm being capable of being displaced relative to the upper link (35);
   a third arm (39) having a first end (39a) and a second end (39b), the first end of the third arm being joined to the second end of the second arm (38), the third arm being capable of being displaced relative to the second arm (38); and
   a fourth arm (40) having a first end (40a) and a second end (40b), the first end of the fourth arm being joined to the second end of the third arm (39), the fourth arm being capable of being displaced relative to the third arm (39), the fourth arm being equipped with holding means (50) for holding a load to be carried;
   wherein the lower link (34), the upper link (35), the first arm (36), and the auxiliary link (37) form a quadric crank mechanism,
   and the first end of the fourth arm (40) is below the first end of the third arm (39) when the first to fourth arms are respectively vertically extended so as to set the robot arm structure in a reference position.

2. The robot arm structure for a carrying robot according to claim 1, wherein the first to fourth arms (36, 38, 39, 40) are distanced vertically from the reference plane respectively by distances not shorter than a limit height He at which the robot arm structure is at a nearest possible distance from the reference plane when the robot arm structure is set in the reference position.

3. The robot arm structure for a carrying robot according to claim 2, wherein the second arm (38) has a length Y2 not greater than a value equal to (H - He), where II is a vertical distance of the first end of the second arm (38) from the reference plane when the robot arm structure is set in a specific position in which the first arm (36) is inclined at a predetermined angle to the lower link, and He is the limit height Hc.

4. The robot arm structure for a carrying robot according to claim 3, wherein the length Y2 of the second arm (38) is not shorter than a value equal to (Hc + Y3 - H), where He is the limit height, Y3 is a length of the third arm (39) and H is the vertical distance of the first end of the second arm (38) from the reference plane when the robot arm structure is set in the specific position.

5. The robot arm structure for a carrying robot according to any one of claims 1 to 4, further comprising arm position maintaining means (60) for exerting a force on the second arm (38) necessary for maintaining the position of the second arm.

**Patentansprüche**

1. Roboterarmstruktur für einen Transportroboter (30), aufweisend:

   ein Bett (33), das auf einer vorbestimmten Referenzebene installiert ist;
   ein unteres Glied (34), das auf dem Bett (33) angeordnet ist;
   ein oberes Glied (35), das oberhalb des unteren Glieds (34) angeordnet ist;
   einen ersten Arm (36), der das untere Glied (34) und das obere Glied (35) so verbindet, dass er fähig ist, relativ zum oberen Glied und zum unteren Glied bewegt zu werden;

ein Hilfsglied (37), welches das untere Glied (34) und das obere Glied (35) so verbindet, dass es fähig ist, relativ zum oberen Glied und zum unteren Glied bewegt zu werden;

einen zweiten Arm (38), der ein erstes Ende (38a) und ein zweites Ende (38b) aufweist, wobei das erste Ende mit dem oberen Glied (35) verbunden ist, und wobei der zweite Arm fähig ist, relativ zum oberen Glied (35) bewegt zu werden;

einen dritten Arm (39), der ein erstes Ende (39a) und ein zweites Ende (39b) aufweist, wobei das erste Ende des dritten Arms mit dem zweiten Ende des zweiten Arms (38) verbunden ist, wobei der dritte Arm fähig ist, relativ zum zweiten Arm (38) bewegt zu werden; und

einen vierten Arm (40), der ein erstes Ende (40a) und ein zweites Ende (40b) aufweist, wobei das erste Ende des vierten Arms mit dem zweiten Ende des dritten Arms (39) verbunden ist, wobei der vierte Arm fähig ist, relativ zum dritten Arm (39) bewegt zu werden, wobei der vierte Arm mit Halteeinrichtungen (50) zum Halten einer zu transportierenden Last ausgerüstet ist;

wobei das untere Glied (34), das obere Glied (35), der erste Arm (36) und das Hilfsglied (37) einen quadratischen Schwingenmechanismus bilden,

und das erste Ende des vierten Arms (40) sich unterhalb des ersten Endes des dritten Arms (39) befindet, wenn sich die ersten bis vierten Arme jeweils vertikal erstrecken, so dass die Roboterarmstruktur in eine Referenzposition eingestellt wird.

2. Roboterarmstruktur für einen Transportroboter nach Anspruch 1, wobei die ersten bis vierten Arme (36, 38, 39, 40) vertikal beabstandet von der Referenzebene angeordnet sind, und zwar jeweils um Abstände nicht geringer als eine Grenzhöhe Hc, bei welcher sich die Roboterarmstruktur in einem nächstmöglichen Abstand von der Referenzebene befindet, wenn die Roboterarmstruktur in die Referenzposition eingestellt ist.

3. Roboterarmstruktur für einen Transportroboter nach Anspruch 2, wobei der zweite Arm (38) eine Länge Y2 hat, die nicht größer als ein Wert von (H-Hc) ist, wobei H ein vertikaler Abstand des ersten Endes des zweiten Arms (38) von der Referenzebene ist, wenn die Roboterarmstruktur in eine spezifische Position eingestellt ist, in welcher der erste Arm (36) unter einem vorbestimmten Winkel zum unteren Glied geneigt ist, und Hc ist die Grenzhöhe Hc.

4. Roboterarmstruktur für einen Transportroboter nach Anspruch 3, wobei die Länge Y2 des zweiten Arms (38) nicht kürzer als ein Wert von (Hc+Y3-H) ist, wobei Hc die Grenzhöhe ist, Y3 eine Länge des dritten Arms (39) ist und H der vertikale Abstand des ersten Endes des zweiten Arms (38) von der Referenzebene ist, wenn die Roboterarmstruktur in die spezifische Position eingestellt ist.

5. Roboterarmstruktur für einen Transportroboter nach einem der Ansprüche 1 bis 4, die weiter eine Armpositions-Beibehaltungseinrichtung (60) aufweist, um eine Kraft auf den zweiten Arm (38) auszuüben, die erforderlich ist, um die Position des zweiten Arms beizubehalten.

**Revendications**

1. Structure de bras de robot pour un robot de transport (30), comprenant :

un lit (33) installé sur un plan de référence prédéterminé ;
une liaison inférieure (34) disposée sur le lit (33) ;
une liaison supérieure (35) disposée au-dessus de la liaison inférieure (34) ;
un premier bras (36) assemblant la liaison inférieure (34) et la liaison supérieure (35) afin de pouvoir se déplacer par rapport à la liaison supérieure et à la liaison inférieure ;
une liaison auxiliaire (37) assemblant la liaison inférieure (34) et la liaison supérieure (35) afin de pouvoir être déplacée par rapport à la liaison supérieure et à la liaison inférieure ;
un deuxième bras (38) ayant une première extrémité (38a) et une seconde extrémité (38b), la première extrémité étant assemblée à la liaison supérieure (35), le deuxième bras pouvant être déplacé par rapport à la liaison supérieure (35) ;
un troisième bras (39) ayant une première extrémité (39a) et une seconde extrémité (39b), la première extrémité du troisième bras étant assemblée à la seconde extrémité du deuxième bras (38), le troisième bras pouvant être déplacé par rapport au deuxième bras (38) ; et
un quatrième bras (40) ayant une première extrémité (40a) et une seconde extrémité (40b), la première extrémité du quatrième bras étant assemblée à la seconde extrémité du troisième bras (39), le quatrième bras pouvant être déplacé par rapport au troisième bras (39), le quatrième bras étant équipé de moyens de support (50) pour supporter une charge à transporter ;

dans laquelle la liaison inférieure (34), la liaison supérieure (35), le premier bras (36) et la liaison auxiliaire (37) forment un mécanisme quadratique à manivelle,

et la première extrémité du quatrième bras (40) est au-dessous de la première extrémité du troisième bras (39) lorsque le premier au quatrième bras sont respectivement étendus verticalement afin de déterminer la structure de bras de robot dans une position de référence,

2. Structure de bras de robot pour un robot de transport selon la revendication 1, dans laquelle le premier au quatrième bras (36, 38, 39, 40) sont éloignés verticalement du plan de référence respectivement par des distances non inférieures à une hauteur limite Hc à laquelle la structure de bras de robot est à une distance la plus proche possible du plan de référence lorsque la structure de bras de robot est placée dans la position de référence.

3. Structure de bras de robot pour un robot de transport selon la revendication 2, dans laquelle le deuxième bras (38) a une longueur Y2 non supérieure à une valeur égale à (H - Hc) où H est une distance verticale de la première extrémité du deuxième bras (38) à partir du plan de référence lorsque la structure de bras de robot est placée dans une position spécifique dans laquelle le premier bras (36) est incliné selon un angle prédéterminé par rapport à la liaison inférieure, et Hc est la hauteur limite Hc.

4. Structure de bras de robot pour un robot de transport selon la revendication 3, dans laquelle la longueur Y2 du deuxième bras (38) n'est pas plus courte qu'une valeur égale à (Hc + Y3 - H), où Hc est la hauteur limite, Y3 est une longueur du troisième bras (39) et H est la distance verticale de la première extrémité du deuxième bras (38) à partir du plan de référence lorsque la structure de bras de robot est placée dans la position spécifique.

5. Structure de bras de robot pour un robot de transport selon l'une quelconque des revendications 1 à 4, comprenant en outre des moyens de maintien de position de bras (60) pour exercer une force sur le deuxième bras (38) nécessaire pour maintenir la position du deuxième bras.

FIG. 1

FIG. 2

FIG. 3

FIG. 4

FIG. 5

EP 1 792 694 B1

FIG. 6

EP 1 792 694 B1

FIG. 7

FIG. 8

FIG. 9

FIG. 10

FIG. 11

**FIG. 12**

**FIG. 13**

## FIG. 14

## FIG. 15

**FIG. 16**

**FIG. 17**

FIG. 18

FIG. 19

FIG. 20

FIG. 21

START ~ a0

RECEIVE A LOAD ~ a1

CARRY THE LOAD
HORIZONTALLY IN A
DOWNSTREAM
CARRYING DIRECTION ~ a2

TRANSFER THE LOAD
TO THE DOWNSTREAM
CARRYING ROBOT ~ a3

MOVE THE TABLE
HORIZONTALLY IN THE
UPSTREAM CARRYING
DIRECTION ~ a6

DOES THE
CARRYING OPERATION
NEED TO BE
CONTINUED? a4

YES

NO

END ~ a5

FIG. 22

FIG. 23

FIG. 24

START — b0

MAINTAIN THE RESPECTIVE POSITIONS OF THE FIRST AND SECOND ARMS AND DISPLACE THE THIRD AND FOURTH ARMS COORDINATELY — b1

DISPLACE THE FIRST TO FOURTH ARMS COORDINATELY — b2

STOP AND HOLD THE TABLE AT A MACHINING STATION — b3

DISPLACE THE FIRST TO FOURTH ARMS COORDINATELY — b4

MAINTAIN THE RESPECTIVE POSITIONS OF THE FIRST AND SECOND ARMS AND DISPLACE THE THIRD AND FOURTH ARMS COORDINATELY — b5

END — b6

# FIG. 25

FIG. 26

FIG. 27

FIG. 28

FIG. 29

(1)  (2)

$HO-H=2\cdot Y2$

(3)

FIG. 30

FIG. 31

FIG. 32

FIG. 33

EP 1 792 694 B1

## FIG. 34

## FIG. 35

FIG. 36

FIG. 37

FIG. 38

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003231075 A